(19) Europäisches Patentamt
European Patent Office
Office européen des brevets

(11) **EP 4 697 714 A1**

(12) **EUROPEAN PATENT APPLICATION**
published in accordance with Art. 153(4) EPC

(43) Date of publication:
**18.02.2026   Bulletin 2026/08**

(21) Application number: **24787984.4**

(22) Date of filing: **07.04.2024**

(51) International Patent Classification (IPC):
**H04N 19/186** (2014.01)

(52) Cooperative Patent Classification (CPC):
**H04N 19/186; H04N 19/42**

(86) International application number:
**PCT/CN2024/086305**

(87) International publication number:
**WO 2024/212881 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.04.2023   CN 202310390303**

(71) Applicant: **Boe Technology Group Co., Ltd.
Beijing 100015 (CN)**

(72) Inventors:
• **SHU, Long
  Beijing 100176 (CN)**
• **ZHANG, Qian
  Beijing 100176 (CN)**

(74) Representative: **Isarpatent
Patent- und Rechtsanwälte Partg mbB
Friedrichstraße 31
80801 München (DE)**

(54) **CODING METHOD AND APPARATUS, DECODING METHOD AND APPARATUS, AND DEVICE**

(57)    A coding method and apparatus, a decoding method and apparatus, and a device, which facilitate an improvement in the chroma prediction precision, thereby improving the compression effect. The decoding method comprises: receiving coding information corresponding to a target coded block; determining a first model and a second model according to index information and parameter information of the first model and index information and parameter information of the second model; according to a luma down-sampling reconstruction value of a first pixel point, determining a target chroma prediction value of the first pixel point by means of the first model; according to a luma down-sampling reconstruction value of a second pixel point, determining a target chroma prediction value of the second pixel point by means of the second model; and determining a chroma reconstruction value of the target coded block according to the target chroma prediction value and a target difference value of the first pixel point and the target chroma prediction value and a target difference value of the second pixel point.

FIG. 1

## Description

## CROSS-REFERENCE TO RELATED APPLICATION

The present disclosure claims the priority of Chinese patent application filed on April 12, 2023 before the CNIPA, China National Intellectual Property Administration with the application number of 202310390303.8, and the title of "CODING METHOD AND APPARATUS, DECODING METHOD AND APPARATUS, AND DEVICE", which is incorporated herein in its entirety by reference.

## FIELD

The present disclosure belongs to the field of video coding and decoding technology, and more particularly to a coding method and apparatus, a decoding method and apparatus, and a device.

## BACKGROUND

In video coding and decoding, since there is a certain correlation between luma and chroma, in order to remove redundancy between different components of luma and chroma, an intra prediction mode based on a cross-component linear model (CCLM) is proposed for versatile video coding (VVC).

In the CCLM, it is assumed that there is a linear relationship between chroma pixel values and corresponding luma pixel values of a same coding unit (CU). Therefore, the CCLM uses a linear model to generate prediction values of corresponding chroma pixels from reconstructed values of luma pixels. However, in the case of non-linear correlation (or poor linear correlation) between the luma pixels and the chroma pixels in the CU, the accuracy of CCLM prediction is low, resulting in a large residual in the prediction and thus affecting the compression effect.

## SUMMARY

The embodiments of the present disclosure provide a coding method and apparatus, a decoding method and apparatus, and a device, which are conducive to improving the chroma prediction accuracy, thereby improving the compression effect.

In a first aspect, there is provided a decoding method, including:

receiving coding information corresponding to a target coding block, where the coding information at least includes: index information and parameter information of a first model, index information and parameter information of a second model, luma down-sampled reconstructed values and target differences of one or more first pixel points, and luma down-sampled reconstructed values and target differences of one or more second pixel points, the one or more first pixel points are pixel points in the target coding block that satisfy a first condition, the one or more second pixel points are pixel points in the target coding block that do not satisfy the first condition, and the first condition includes that a chroma prediction error of a pixel point by the first model is within a first threshold range;

determining the first model and the second model according to the index information and the parameter information of the first model and the index information and the parameter information of the second model, where the first model is configured to determine a chroma prediction value mapped by a luma down-sampled reconstructed value according to a linear mapping relationship, and the second model is configured to determine a chroma prediction value mapped by a luma down-sampled reconstructed value according to a nonlinear mapping relationship;

determining target chroma prediction values of the one or more first pixel points through the first model according to the luma down-sampled reconstructed values of the one or more first pixel points;

determining target chroma prediction values of the one or more second pixel points through the second model according to the luma down-sampled reconstructed values of the one or more second pixel points; and

determining chroma reconstructed values of the target coding block according to the target chroma prediction values and the target differences of the one or more first pixel points and the target chroma prediction values and the target differences of the one or more second pixel points.

In a second aspect, there is provided a coding method, including:

determining first chroma prediction values of a target coding block through a first model according to luma down-sampled reconstructed values of the target coding block, where the first model is configured to determine a chroma prediction value mapped by a luma down-sampled reconstructed value according to a linear mapping relationship;

determining one or more first pixel points that satisfy a first condition from the target coding block, and determining one or more second pixel points that do not satisfy the first condition from the target coding block, where the first condition includes that a chroma prediction error of a pixel point by the first model is within a first threshold range;

determining target chroma prediction values of the one or more first pixel points according to the first chroma prediction values of the one or more first pixel points;

determining target chroma prediction values of the one or more second pixel points through a second model according to the luma down-sampled reconstructed values of the one or more second pixel points, where the second model is configured to determine a chroma prediction value mapped by a luma down-sampled reconstructed value according to a nonlinear mapping relationship;

respectively determining target differences of the one or more first pixel points and target differences of the one or more second pixel points according to the target chroma prediction values and true chroma values of the one or more first pixel points and the target chroma prediction values and true chroma values of the one or more second pixel points; and

generating coding information corresponding to the target coding block according to index information and parameter information of the first model, index information and parameter information of the second model, the luma down-sampled reconstructed values and the target differences of the one or more first pixel points, and the luma down-sampled reconstructed values and the target differences of the one or more second pixel points.

In a third aspect, there is provided a decoding apparatus, including:

an information receiving module, configured to receive coding information corresponding to a target coding block, where the coding information at least includes: index information and parameter information of a first model, index information and parameter information of a second model, luma down-sampled reconstructed values and target differences of one or more first pixel points, and luma down-sampled reconstructed values and target differences of one or more second pixel points, the one or more first pixel points are pixel points in the target coding block that satisfy a first condition, the one or more second pixel points are pixel points in the target coding block that do not satisfy the first condition, and the first condition includes that a chroma prediction error of a pixel point by the first model is within a first threshold range;

a model determination module, configured to determine the first model and the second model according to the index information and the parameter information of the first model and the index information and the parameter information of the second model, where the first model is configured to determine a chroma prediction value mapped by a luma down-sampled reconstructed value according to a linear mapping relationship, and the second model is configured to determine a chroma prediction value mapped by a luma down-sampled reconstructed value according to a nonlinear mapping relationship;

a first chroma prediction module, configured to determine target chroma prediction values of the one or more first pixel points through the first model according to the luma down-sampled reconstructed values of the one or more first pixel points;

a second chroma prediction module, configured to determine target chroma prediction values of the one or more second pixel points through the second model according to the luma down-sampled reconstructed values of the one or more second pixel points; and

a reconstruction module, configured to determine chroma reconstructed values of the target coding block according to the target chroma prediction values and the target differences of the one or more first pixel points and the target chroma prediction values and the target differences of the one or more second pixel points.

In a fourth aspect, there is provided a coding apparatus, including:

a first determination module, configured to determine first chroma prediction values of a target coding block through a first model according to luma down-sampled reconstructed values of the target coding block, where the first model is configured to determine a chroma prediction value mapped by a luma down-sampled reconstructed value according to a linear mapping relationship;

a second determination module, configured to determine one or more first pixel points that satisfy a first condition from the target coding block, and determine one or more second pixel points that do not satisfy the first condition from the target coding block, where the first condition includes that a chroma prediction error of a pixel point by the first model is within a first threshold range;

a third determination module, configured to determine target chroma prediction values of the one or more first pixel points according to the first chroma prediction values of the one or more first pixel points;

a fourth determination module, configured to determine target chroma prediction values of the one or more second pixel points through a second model according to the luma down-sampled reconstructed values of the one or more second pixel points, where the second model is configured to determine a chroma prediction value mapped by a luma down-sampled reconstructed value according to a nonlinear mapping relationship;

a fifth determination module, configured to respectively determine target differences of the one or more first pixel points and target differences of the one or more second pixel points according to the target chroma prediction values and true chroma values of the one or more first pixel points and the target chroma prediction values and true chroma values of the one or more second pixel points; and

a first generation module, configured to generate coding information corresponding to the target coding block according to index information and parameter information of the first model, index information and parameter information of the second model, the luma down-sampled reconstructed values and the target differences of the one or more first pixel points, and the luma down-sampled reconstructed values and the target differences of the one or more second pixel points.

In a fifth aspect, there is provided a decoding device, including one or more processors and a memory, where the memory stores a program or instructions executable on the one or more processors, and the program or the instructions, when executed by the one or more processors, implement the steps of the decoding method as described in the first aspect.

In a sixth aspect, there is provided a coding device, including one or more processors and a memory, where the memory stores a program or instructions executable on the one or more processors, and the program or the instructions, when executed by the one or more processors, implement the steps of the coding method as described in the second aspect.

In a seventh aspect, there is provided a computing processing device, including:

a memory, which stores computer-readable codes; and

one or more processors, where the computer-readable codes, when executed by the one or more processors, cause the computing processing device to perform the decoding method as described in the first aspect or the coding method as described in the second aspect.

In an eighth aspect, there is provided a computer program, including computer-readable codes, where the computer-readable codes, when run on a computing processing device, cause the computing processing device to perform the decoding method according to the first aspect or the coding method according to the second aspect.

In a ninth aspect, there is provided a computer-readable medium storing the computer program as described in the eighth aspect.

In a tenth aspect, there is provided a coding and decoding system including a coding apparatus and a decoding apparatus, where the decoding apparatus is used to perform the steps of the decoding method as described in the first aspect, and the coding apparatus is used to perform the steps of the coding method as described in the second aspect.

In an eleventh aspect, there is provided a readable storage medium, on which a program or instructions are stored. When executed by a processor, the program or instructions implement the steps of the decoding method as described in the first aspect, or implements the steps of the coding method as described in the second aspect.

In a twelfth aspect, there is provided a chip including a processor and a communication interface, where the communication interface is coupled to the processor, and the processor is used to run a program or instructions to implement the decoding method as described in the first aspect or the coding method as described in the second aspect.

In a thirteenth aspect, there is provided a computer program/program product, which is stored in a storage medium and executed by at least one processor to implement the steps of the decoding method as described in the first aspect or the steps of the coding method as described in the second aspect.

In the embodiments of the present disclosure, the pixel points in the target coding block are divided into two categories by the first condition, and the target chroma prediction values of the two categories of pixel points are determined by using the first model and the second model respectively, so that the overall prediction accuracy of the target coding block can be improved through the joint model prediction, thus improving the compression effect of the target coding block.

The above description is merely a summary of the technical solutions of the present disclosure. In order to more clearly know the elements of the present disclosure to enable the implementation according to the contents of the description, and in order to make the above and other purposes, features and advantages of the present disclosure more apparent and understandable, the particular embodiments of the present disclosure are provided below.

## BRIEF DESCRIPTION OF THE DRAWINGS

In order to more clearly illustrate the technical solutions in the embodiments of the present disclosure or related technologies, the accompanying drawings required for the description of the embodiments or related technologies will be briefly introduced below. Obviously, the drawings described below are some examples of the present disclosure, and other drawings can be obtained according to these drawings without creative labor for those skilled in the art.

FIG. 1 is a flowchart of a decoding method in an embodiment of the present disclosure.

FIG. 2 is a flowchart of a coding method in an embodiment of the present disclosure.

FIG. 3 is a structural block diagram of a decoding apparatus in an embodiment of the present disclosure.

FIG. 4 is a structural block diagram of a coding apparatus in an embodiment of the present disclosure.

FIG. 5 illustrates a schematic block diagram of a computing processing device for performing the method according to the present disclosure.

FIG. 6 illustrates a storage unit for holding or carrying program codes implementing the method according to the present disclosure.

## DETAILED DESCRIPTION

In order to make the purpose, technical solutions, and advantages of the embodiments of the present disclosure clearer, the following will provide a clear and complete description of the technical solutions in the embodiments of the present disclosure in conjunction with the accompanying drawings in the embodiments of the present disclosure. Apparently, the described embodiments are merely a part of the embodiments of the present disclosure, rather than all of the embodiments. All other embodiments obtained, based on the embodiments in the present disclosure, by those skilled in the art without paying creative labor fall within the protection scope of the present disclosure.

The terms "first", "second", and the like in the specification and claims of the present disclosure are used to distinguish similar objects rather than to describe a specific order or sequence. It should be understood that the terms used in this way are interchangeable in appropriate circumstances so that the embodiments of the present disclosure can be implemented in other orders than the order illustrated or described herein, and "first" and "second" are usually for distinguishing same-type objects but not limiting the number of objects, for example, a first object may be one or at least two. In addition, "and/or" in the specification and claims indicates at least one of connected objects, and the symbol "/" generally indicates that the associated objects are in an "or" relationship.

In video coding and decoding, since there is a certain correlation between luma and chroma, in order to remove redundancy between different components of luma and chroma, an intra prediction mode based on a cross-component linear model (CCLM) is proposed for versatile video coding (VVC). The CCLM uses a linear model to generate prediction values of corresponding chroma pixels from reconstructed values of luma pixels to reduce cross redundancy. Chroma sampling is calculated through luma downsampling as follows:

$$pred_C(i,j) = \alpha_0 \cdot rec_L'(i,j) + \alpha_1$$

where $pred_C(i,j)$ represents a prediction value of a chroma pixel in a CU at coordinates *(i,j)*, $rec_L'(i,j)$ represents a reconstructed value of a luma pixel corresponding to the chroma pixel in a same CU after downsampling, and linear model parameters $\alpha_0$ and $\alpha_1$ can be determined based on a linear minimum mean square error (LMMSE) of a linearly reconstructed current adjacent sampling block.

In the CCLM, it is assumed there is a local texture linear correlation between luma and chroma. However, sometimes the linear model cannot accurately represent an exact relationship between luma and chroma.

Taking a corresponding relationship between luma, chroma and RGB in a color space as an example:

$$Y = 0.299R + 0.587G + 0.114B$$

$$U = -0.1687R - 0.3313G + 0.5B + 128$$

$$V = 0.5R - 0.4187G - 0.0813B + 128$$

where Y represents luma (i.e., grayscale value); U and V represent chroma, used to describe color and saturation of an image; R, G and B represent colors of red, green, and blue channels.

From the above corresponding relationship, it can be seen that although there is a certain linear correlation and strong correlation redundancy between luma and chroma, they are not completely linearly correlated. Therefore, when a single linear function is used to represent a mapping relationship between chroma and luma in a CU through constructed luma down-sampled values, for points that are far away from a straight line fitted by the linear function, chroma errors predicted by the linear function are relatively large (for CU with poorer linear correlation, there will be more far points), thereby resulting in a large residual for the overall chroma prediction of the CU, which reduces a compression rate of the CU.

For the problems existing in the related art, the present disclosure proposes a coding and decoding method based on a generic joint model prediction to achieve a wider application range and a higher compression rate.

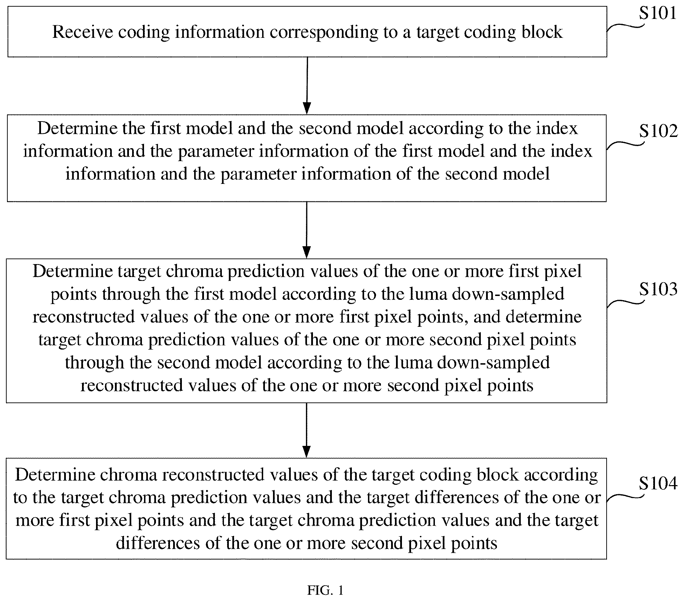

In a first aspect, as shown in FIG. 1, which is a flowchart of a decoding method provided by an embodiment of the present disclosure, method includes steps S101 to S104.

In step S101, coding information corresponding to a target coding block is received.

The coding information at least includes: index information and parameter information of a first model, index information and parameter information of a second model, luma down-sampled reconstructed values and target differences of one or more first pixel points, and luma down-sampled reconstructed values and target differences of one or more second pixel points. The one or more first pixel points are pixel points in the target coding block that satisfy a first condition, and the one or more second pixel points are pixel points in the target coding block that do not satisfy the first condition. The first condition includes that a chroma prediction error of a pixel point by the first model is within a first threshold range.

It can be understood that the first condition is used to divide pixel points in the target coding block into the following two categories: one is pixel points corresponding to points close to a linear function fitted by the first model (that is, the one or more first pixel points with the chroma prediction error within the first threshold range), and the other is pixel points corresponding to points far away from the linear function fitted by the first model (that is, the one or more second pixel points with the chroma prediction error outside the first threshold range).

In step S102, the first model and the second model are determined according to the index information and the parameter information of the first model and the index information and the parameter information of the second model.

The first model is used to determine a chroma prediction value mapped by a luma down-sampled reconstructed value according to a linear mapping relationship, and the second model is used to determine a chroma prediction value mapped by a luma down-sampled reconstructed value according to a nonlinear mapping relationship.

In specific implementation, after determining a model for obtaining target chroma prediction values of pixel points and parameter values of the model, a coding device can generate index information of the model (for example, the model index of the first model, the model index of the second model) and parameter information, so that a decoding device can restore the model used by the coding device to determine the target chroma prediction values of the target coding block according to the received index information and parameter information of the model.

In step S103, target chroma prediction values of the one or more first pixel points are determined through the first model according to the luma down-sampled reconstructed values of the one or more first pixel points, and target chroma prediction values of the one or more second pixel points are determined through the second model according to the luma down-sampled reconstructed values of the one or more second pixel points.

It can be understood that the first model is a model for chroma prediction using a linear function, for example, the linear model used by the CCLM mentioned above.

In specific implementation, the coding device can determine values of parameters in the first model (for example, the linear model parameters $\alpha_0$ and $\alpha_1$ mentioned above) in advance according to a reference coding block of the target coding block (for example, an adjacent sampling block, or partial coding blocks of the target coding block). After determining the parameter values in the first model, considering that the first model can achieve a good chroma prediction effect on the pixel points corresponding to the points close to the linear function fitted by itself, first chroma prediction values output by the first model can be directly used as the target chroma prediction values of the corresponding one or more first pixel points to determine subsequent target differences. Or, the one or more first pixel points can be used to adjust the parameter values in the first model, and the target chroma prediction values of the one or more first pixel points can be determined through the first model with adjusted parameters. Since a straight line fitted by the first model with adjusted parameters can more accurately represent the mapping relationship between chroma and luma of the one or more first pixel points, chroma prediction errors of the one or more first pixel points can be further reduced.

Similarly, the coding device can determine parameter values in the second model in advance according to the reference coding block of the target coding block, or directly determine the parameter values in the second model or adjust the determined parameter values in the second model according to the one or more second pixel points. After determining the parameter values in the second model, the luma down-sampled reconstructed values of the one or more second pixel points can be input into the second model, so as to obtain the target chroma prediction values output by the second model for the one or more second pixel points.

It can be understood that since the joint linear model and nonlinear model are adopted in both the coding and decoding processes to determine the target chroma prediction values of the target coding block, high-precision chroma prediction can be achieved for the target coding block with good or poor linear correlation between chroma and luma, thus expanding the application scope of the coding and decoding method.

In step 104, chroma reconstructed values of the target coding block are determined according to the target chroma prediction values and the target differences of the one or more first pixel points and the target chroma prediction values and the target differences of the one or more second pixel points.

In specific implementation, after determining the target chroma prediction values of the one or more first pixel points and the one or more second pixel points respectively through the first model and the second model based on the above steps, the coding device can determine the target differences of the one or more first pixel points and the target differences of the one or more second pixel points respectively according to the target chroma prediction values and true chroma values of the one or more first pixel points, and the target chroma prediction values and true chroma values of the one or more second pixel points, and generate the coding information corresponding to the target coding block according to the index information and the parameter information of the first model, the index information and the parameter information of the second model, the target differences of the one or more first pixel points, and the target differences of the one or more second pixel points. Due to the joint model prediction used by the coding device, the target differences (for example, residual values) of respective pixel points in the target coding block are reduced overall, so that the target differences used by the coding device to generate the coding information have a smaller data amount, thus improving the compression rate of the target coding block.

After receiving the above coding information corresponding to the target coding block and the luma down-sampled reconstructed values of the target coding block, the decoding device can determine the first model and the second model according to the index information and the parameter information of the first model and the index information and the parameter information of the second model, determine the target chroma prediction values of the corresponding pixel points through the first model and the second model according to the luma down-sampled reconstructed values of the one or more first pixel points and the one or more second pixel points, and finally determine the chroma reconstructed values of the target coding block according to the target chroma prediction values and the target differences of the one or more first pixel points, and the target chroma prediction values and the target differences of the one or more second pixel points.

In a possible embodiment, the above index information can also describe location distribution of the pixel points (for example, the one or more first pixel points, and the one or more second pixel points) corresponding to the model (for example, the first model, the second model) in the target coding block through an index graph, so that the decoding device can use the corresponding model to restore the target chroma prediction values determined by the coding device for the pixel points at the corresponding locations according to the index information.

It can be seen from the above steps that the pixel points in the target coding block are divided into two categories by the first condition, and the target chroma prediction values of the two categories of pixel points are determined by using the first model and the second model respectively, so that the overall prediction accuracy of the target coding block can be improved through the joint model prediction, thus improving the compression effect of the target coding block.

Embodiment 1

This embodiment describes an example of determining the target chroma prediction values of the one or more first pixel points. According to different pixel points used by model determination, determination of the target chroma prediction values of the one or more first pixel points can be specifically divided into the following two manners.

Manner 1: the first model is constructed according to the reference coding block of the target coding block, and the first chroma prediction values output by the first model for the one or more first pixel points are directly determined as the target chroma prediction values of the one or more first pixel points.

In specific implementation, a linear model can be selected in advance, and a loss function corresponding to the linear model can be constructed according to luma down-sampled reconstructed values and true luma values of the reference coding block. For example, the loss function can be determined according to an estimated linear minimum mean square error of a linear model jointly mapped by true chroma values and luma down-sampled reconstructed values of the target coding block. Then, parameter values in the linear model when the loss function is at its minimum are determined, and the first model corresponding to the target coding block can be obtained by bringing the parameter values into the linear model.

The linear model can be a model such as CCLM used to characterize a linear mapping relationship between the luma down-sampled reconstructed value and the chroma prediction value. For example, the linear mapping relationship characterized by the linear model (that is, the linear mapping relationship used by the first model to determine the chroma prediction values) can be as follows:

$$pred_C(i,j) = \alpha_0 \cdot rec'_L(i,j) + \alpha_1$$

where $pred_C(i,j)$ is a chroma prediction value of a pixel point at coordinates *(i,j)*, $rec'_L(i,j)$ is a luma down-sampled reconstructed value of the pixel point at the coordinates *(i,j)*, and $\alpha_0$, $\alpha_1$ are values of parameters.

Based on the above linear model, the corresponding loss function (i.e., the estimated linear minimum mean square error jointly mapped by the true chroma values and the luma down-sampled reconstructed values) is as follows:

$$Loss = \Sigma(y(i,j) - (\alpha_0 x(i,j) + \alpha_1))^2 \qquad (4)$$

where *Loss* is the estimated linear minimum mean square error, *y(i,j)* is a true chroma value of a pixel point at coordinates *(i,j)*, *x(i,j)* is a luma down-sampled reconstructed value of the pixel point at the coordinates *(i,j)*, a value range of the coordinates *(i,j)* is a coordinate value range of the reference coding block, and $\alpha_0$, $\alpha_1$ are values of parameters.

For the parameter values $\alpha_0$ and $\alpha_1$, the equation (4) can be respectively differentiated as:

$$\frac{\partial Loss}{\partial \alpha_0} = -2\Sigma(x(i,j)(y(i,j) - (\alpha_0 x(i,j) + \alpha_1)) \qquad (4.1)$$

$$\frac{\partial Loss}{\partial \alpha_1} = -2\Sigma(y(i,j) - (\alpha_0 x(i,j) + \alpha_1)) \qquad (4.2)$$

Let $\frac{\partial Loss}{\partial \alpha_i} = 0$, $\alpha_0$ and $\alpha_1$ can be determined by taking a gradient of the loss function in the $\alpha_i$ direction to estimate a minimum value.

For the manner 1, the coding device can generate the parameter information of the first model after determining the parameter values of the first model.

Manner 2: parameters of the first model (i.e., an initial first model) are adjusted according to the first chroma prediction values of the one or more first pixel points, chroma prediction values output by the first model with adjusted parameters for the one or more first pixel points are determined as the target chroma prediction values of the one or more first pixel points.

In specific implementation, according to the luma down-sampled reconstructed values and the true chroma values of the one or more first pixel points, and corrected parameter values (for example, $\alpha_0$ and $\alpha_1$) can be obtained by using the linear model used to construct the first model again. The corrected parameter values can be brought into the linear model, and the first model with adjusted parameters can be obtained. Using the first model with adjusted parameters to determine the target chroma prediction values of the one or more first pixel points can reduce the error well. It can be understood that the process of determining the corrected parameter values through the one or more first pixel points and the linear model is similar to the process of determining the parameter values through the target coding block and the linear model described in the manner 1, and will not be repeated here.

For the manner 2, after determining the corrected parameter values of the first model, the coding device can generate the parameter information of the first model according to the corrected parameter values.

Embodiment 2

This embodiment describes an example of determining the target chroma prediction values of the one or more second pixel points. Specifically, the following three manners can be adopted to select the model to determine the target chroma prediction values of the one or more second pixel points.

Manner 1: the second model is directly used to determine the target chroma prediction values of the one or more second pixel points.

In this embodiment, since the correlation between luma and chroma is not approximately linear, the first chroma prediction value of each pixel point in the target coding block can be determined first using the first model (for example, the CCLM), and then an error calculation is made according to the first chroma prediction value and the true chroma value. The chroma of the first pixel points with the chroma prediction error within the first threshold range is predicted by a linear model such as the CCLM (that is, the first model), and the chroma of the second pixel points with the chroma prediction error outside the first threshold range is predicted by a non-linear model such as a curve model (that is, the second model), so that the chroma prediction error of the first model is reduced through the second model, so as to improve the overall prediction accuracy of the target coding block.

Manner 2: one of the first model and the second model is selected to determine the target chroma prediction values of the one or more second pixel points.

In this embodiment, the coding device can determine a first prediction error corresponding to the first model (for example, a sum of mean square errors of all second pixel points) according to first chroma prediction values and true chroma values of the one or more second pixel points, second chroma prediction values of the one or more second pixel points are determined through the second model according to the luma down-sampled reconstructed values of the one or more second pixel points, and then a second prediction error corresponding to the second model is determined according to the second chroma prediction values and the true chroma values of the one or more second pixel points.

Subsequently, it is determined whether the first prediction error is less than the second prediction error, so as to determine whether the first model (the initial first model or the first model with adjusted parameters) has a higher prediction accuracy than the second model when the chroma of the one or more second pixel points is predicted.

If the first prediction error is not less than the second prediction error, it means that the second model has a higher prediction accuracy than the first model, so the second model is selected to determine the target chroma prediction values of the one or more second pixel points. That is, the target chroma prediction values of the one or more second pixel points (second target pixel points or fourth target pixel points) are determined according to the second chroma prediction values of the one or more second pixel points.

If the first prediction error is less than the second prediction error, it means that the prediction accuracy of the first model is higher than that of the second model. In this case, the introduction of the second model cannot reduce prediction errors of the one or more second pixel points, so the first model is still selected to determine the target chroma prediction values of the one or more second pixel points. That is, the target chroma prediction values of the one or more second pixel points (that is, first target pixel points or third target pixel points) are determined according to the first chroma prediction values of the one or more second pixel points.

In an embodiment, the decoding device can determine whether the one or more second pixel points are the first target pixel points or the second target pixel points according to the index information of the first model (that is, the initial first model, in which case the coding device determines the target chroma prediction value using the initial first model) and/or the index information of the second model. For example, the index information of the first model describes the model corresponding to each pixel point in the target coding block, and the index information of the second model describes the location distribution of the one or more first pixel points and the one or more second pixel points in the target coding block. In this, the decoding device can know the location distribution of the one or more second pixel points and corresponding models according to the received index information, and then determine whether the one or more second pixel points are the first target pixel points or the second target pixel points.

When the one or more second pixel points are the first target pixel points, the decoding device determines target chroma prediction values of the first target pixel points through the first model according to the luma down-sampled reconstructed values of the first target pixel points. When the one or more second pixel points are the second target pixel points, target chroma prediction values of the second target pixel points are determined through the second model according to the luma down-sampled reconstructed values of the second target pixel points.

It can be understood that the first target pixel points are second pixel points of which the first prediction error is smaller than the second prediction error, and the second target pixel points are second pixel points of which the first prediction error is not smaller than the second prediction error. The first prediction error is determined according to chroma prediction values of the one or more second pixel points by the initial first model and the true chroma values of the one or more second pixel points. The second prediction error is determined according to chroma prediction values of the one or more second pixel points by the second model and the true chroma values of the one or more second pixel points.

In another embodiment, when the one or more second pixel points are the third target pixel points, the decoding device can determine target chroma prediction values of the third target pixel points through the first model (that is, the first model with adjusted parameters, in which case the coding device determines the target chroma prediction value using the first model with adjusted parameters) according to the luma down-sampled reconstructed values of the third target pixel points. When the one or more second pixel points are the fourth target pixel points, target chroma prediction values of the fourth target pixel points are determined through the second model according to the luma down-sampled reconstructed values of the fourth target pixel points.

It can be understood that the third target pixel points are second pixel points of which a third prediction error is smaller than a fourth prediction error, the fourth target pixel points are second pixel points of which the third prediction error is not smaller than the fourth prediction error. The third prediction error is determined according to chroma prediction values of the one or more second pixel points by the first model with adjusted parameters and the true chroma values of the one or more second pixel points, and the fourth prediction error is determined according to chroma prediction values of the one or more second pixel points by the second model and the true chroma values of the one or more second pixel points.

Manner 3: one of the first model with adjusted parameters and the second model is selected to determine the target chroma prediction values of the one or more second pixel points.

In this embodiment, after the parameters of the first model are adjusted by using the one or more first pixel points, the chroma of the one or more second pixel points can be predicted using the first model with adjusted parameters. Specifically, according to the luma down-sampled reconstructed values of the one or more second pixel points, third chroma prediction values of the one or more second pixel points are determined through the first model with adjusted parameters, and the third prediction error corresponding to the first model with adjusted parameters is determined according to the third chroma prediction values and the true chroma values of the one or more second pixel points.

Meanwhile, the constructed second model can be used to predict the chroma of the one or more second pixel points. Specifically, according to the luma down-sampled reconstructed values of the one or more second pixel points, fourth chroma prediction values of the one or more second pixel points are determined through the second model, and the fourth prediction error corresponding to the second model is determined according to the fourth chroma prediction values and the true chroma values of the one or more second pixel points.

It is determined whether the third prediction error is less than the fourth prediction error, that is, it is determined whether the first model with adjusted parameters has a higher prediction accuracy than the second model when the chroma of the one or more second pixel points is predicted.

If the third prediction error is less than the fourth prediction error, it indicates that the prediction accuracy of the first model with adjusted parameters is higher than that of the second model, and the target chroma prediction values of the one or more second pixel points are determined according to the third chroma prediction values of the one or more second pixel points. If the third prediction error is not less than the fourth prediction error, it indicates that the second model has a higher prediction accuracy than the first model with adjusted parameters, so the target chroma prediction values of the one or more second pixel points are determined according to the fourth chroma prediction values of the one or more second pixel points, so as to reduce the overall chroma prediction error of the one or more second pixel points.

Embodiment 3

This embodiment describes an example of the second model.

In this embodiment, the second model can be constructed according to the target coding block (for example, a reference coding block of the target coding block), or according to the one or more second pixel points to improve the chroma prediction accuracy of the second model for the one or more second pixel points.

For example, the second model can be constructed through a target mapping relationship (for example, a mapping relationship characterized by a quadratic curve model) according to the luma down-sampled reconstructed values and the true chroma values of the one or more second pixel points, where the target mapping relationship is used to characterize a nonlinear mapping relationship between the luma down-sampled reconstructed value and the chroma prediction value.

In specific implementation, a value of each parameter in a target formula used to characterize the target mapping relationship can be determined according to the luma down-sampled reconstructed values and the true chroma values of the one or more second pixel points. For example, the value of each parameter can be determined according to an estimated linear minimum mean square error of the target formula jointly mapped by the true chroma values and the luma down-sampled reconstructed values of the one or more second pixel points, and then the second model can be constructed according to the target formula and the value of each parameter.

For example, the target formula is as follows:

$$pred_C(i,j) = \alpha_2 \cdot (((rec'_L(i,j))^2 + midValue \gg bitDepth) + \alpha_3 \cdot rec'_L(i,j) + \alpha_4 \cdot midValue$$

where *bitDepth* is a bit depth, and *midValue* is a median of the bit depth. For example, if the bit depth of a pixel color is 10 bits, *midValue* is 512; if the bit depth is bits, *midValue* is 128. By adding the bit depth parameter and the median parameter of the bit depth, it can be ensured that the operation result of the target formula does not overflow. $pred_C(i,j)$ is the chroma prediction value of a pixel point at coordinates *(i,j)*, $rec'_L(i,j)$ is the luma down-sampled reconstructed value of the pixel point at the coordinates *(i,j)*, $\alpha_2$, $\alpha_3$, $\alpha_4$ are values of parameters, and $\gg$ is a shift operation.

In this case, the estimated linear minimum mean square error of the target formula is determined by the following loss function:

$$Loss = \Sigma(y(i,j)-((\alpha_2((x(i,j)^2 + midValue) \gg bitDepth) + \alpha_3 x(i,j) + \alpha_4 midValue))^2 \qquad (5)$$

where *Loss* is the estimated linear minimum mean square error, $y(i,j)$ is a true chroma value of a pixel point at coordinates *(i,j)*, $x(i,j)$ is a luma down-sampled reconstructed value of the pixel point at the coordinates *(i,j)*, *bitDepth* is a bit depth, *midValue* is a median of the bit depth, a value range of the coordinates *(i,j)* is a coordinate value range of the one or more second pixel points, and $\alpha_2$, $\alpha_3$, $\alpha_4$ are values of parameters.

For the parameter values $\alpha_2$, $\alpha_3$ and $\alpha_4$, the equation (5) can be respectively differentiated as:

$$\frac{\partial Loss}{\partial \alpha_2} = -2(\Sigma(x(i,\ j)^2 >> bitDepth)(y(i,\ j)-(\alpha_2((x(i,\ j)^2 + midValue) >> bitDepth) + \alpha_3 x(i,\ j) + \alpha_4 midValue))$$

(5.1)

$$\frac{\partial Loss}{\partial \alpha_3} = -2(\Sigma x(i,\ j)(y(i,\ j)-(\alpha_2((x(i,\ j)^2 + midValue) >> bitDepth) + \alpha_3 x(i,\ j) + \alpha_4 midValue))$$

(5.2)

$$\frac{\partial Loss}{\partial \alpha_4} = -2midValue\Sigma(y(i,j)-(\alpha_0((x(i,j)^2 + midValue) >> bitDepth) + \alpha_1 x(i,j) + \alpha_2 midValue))$$

(5.3)

Let $\frac{\partial Loss}{\partial \alpha_i} = 0$, (i=2, 3, 4), a minimum value is estimated by taking a gradient of the loss function in the $\alpha_i$ direction, and the parameter values $\alpha_2$, $\alpha_3$ and $\alpha_4$ can be determined by solving the simultaneous equation system.

The second model can be obtained by bringing the determined $\alpha_2$, $\alpha_3$ and $\alpha_4$ into the above target formula. It can be understood that the number of parameters in the second model is 3, so at least three second pixel points are required to determine values of the parameters in the second model. Since a minimum size of a chroma block of a video image (i.e., a VVC video chroma block) is 4x4, that is, there are at least 16 pixel points in the chroma block of the target coding block or its adjacent coding blocks, any first model and the second model described in the present disclosure can be constructed using the target coding block.

In a possible embodiment, in order to reduce the amount of computation or ensure the normal construction of the second model, it can be determined whether to enable the joint chroma prediction based on the first model and the second model according to the number of second pixel points. Specifically, it can be detected whether the number of second pixel points is greater than a number threshold (such as 2). The number threshold can be determined according to the number of parameters of the second model, and/or the number of pixel points with a relatively large acceptable prediction error.

If the number of the second pixel points is not greater than the number threshold, the first model is directly used to determine target chroma prediction values of the target coding block. That is, the target chroma prediction values of the target coding block are determined according to first chroma prediction values of the target coding block. If the number of the second pixel points is greater than the number threshold, the above joint chroma prediction method is enabled. For example, target chroma prediction values of the one or more first pixel points are determined according to first chroma prediction values of the one or more first pixel points, and target chroma prediction values of the one or more second pixel points are determined through the second model according to the luma down-sampled reconstructed values of the one or more second pixel points.

In an embodiment, after determining the one or more second pixel points that do not satisfy the first condition from the target coding block, the coding device detects whether the number of the second pixel points is greater than the number threshold.

If the number of the second pixel points is not greater than the number threshold, the coding device determines the target chroma prediction values of the target coding block according to the first chroma prediction values of the target coding block, determines target differences of the target coding block according to the target chroma prediction values and true chroma values of the target coding block, and generates coding information corresponding to the target coding block according to index information and parameter information of the first model, and luma down-sampled reconstructed values and the target differences of the target coding block;

If the number of the second pixels is greater than the threshold number, the coding device performs the following operations:

determining the target chroma prediction values of the one or more first pixel points according to the first chroma prediction values of the one or more first pixel points;
in response to the number of the second pixel points being greater than the number threshold, determining the target chroma prediction values of the one or more second pixel points through the second model according to the luma down-sampled reconstructed values of the one or more second pixel points;
respectively determining the target differences of the one or more first pixel points and the target differences of the one or more second pixel points according to the target chroma prediction values and the true chroma values of the one or more first pixel points and the target chroma prediction values and the true chroma values of the one or more second pixel points; and

generating the coding information corresponding to the target coding block according to the index information and the parameter information of the first model, the index information and the parameter information of the second model, the luma down-sampled reconstructed values and the target differences of the one or more first pixel points, and the luma down-sampled reconstructed values and the target differences of the one or more second pixel points.

In an embodiment, the decoding device subsequently receives first coding information corresponding to the target coding block. The first coding information is generated when the number of the second pixel points is greater than the number threshold. The first coding information at least includes: the index information and the parameter information of the first model, the index information and the parameter information of the second model, the luma down-sampled reconstructed values and the target differences of the one or more first pixel points, and the luma down-sampled reconstructed values and the target differences of the one or more second pixel points.

In a case where the first coding information is not received and second coding information corresponding to the target coding block is received, the coding device determines target chroma prediction values of the target coding block through the first model according to luma down-sampled reconstructed values of the target coding block; and determines chroma reconstructed values of the target coding block according to the target chroma prediction values and target differences of the target coding block.

The second coding information is generated when the number of the second pixel points is not greater than the number threshold. The second coding information at least includes: the index information and the parameter information of the first model, and the luma down-sampled reconstructed values and the target differences of the target coding block.

In the above embodiment 3, the second model can be any model that can realize chroma prediction except the linear model. For example, the second model can be a curve model, or a linear model with added nonlinear attributes (for example, a linear model (LM)-angular prediction, a piecewise linear model, etc.).

Therefore, in addition to the second model constructed by the above target formula, the second model can also be determined by determining parameters of any of the following models: cross-component general model (CCGM), slope adjustment of CCLM, multi-model linear model (MM-CCLM), multi sampling filter linear model (MF-CCLM), LM-angular prediction (LAP), convolutional cross-component model (CCCM), gradient linear model (GLM).

The CCGM is a chroma prediction model that introduces an activation function for error correction. For example, the CCGM can be used to characterize the following two nonlinear mapping relationships:

Nonlinear mapping relationship 1:

$$pred_C(i,j) = \alpha_0 \cdot \left( \left( rec_L'(i,j) \right)^2 + midValue \gg bitDepth \right) + \sigma \quad (\alpha_1 \cdot rec_L'(i,j) + \alpha_2 \cdot midValue) + \alpha_3 \cdot midValue$$

Nonlinear mapping relationship 2:

$$pred_C(i,j) = \sigma\left( \alpha_0 \cdot \left( \left( \left( rec_L'(i,j) \right)^2 + \alpha_1 \cdot midValue \right) \gg bitDepth \right) + \sigma \left( \alpha_2 \cdot rec_L'(i,j) + \alpha_3 \cdot midValue \right) \right)$$

where $\sigma()$ is an activation function, *bitDepth* is a bit depth, *midValue* is a median of the bit depth, $pred_C(i,j)$ is a chroma prediction value of a pixel point at coordinates *(i,j)*, $rec_L'(i,j)$ is a luma down-sampled reconstructed value of the pixel point at the coordinates *(i,j)*, $\alpha_0, \alpha_1, \alpha_2, \alpha_3$ are values of parameters in the nonlinear mapping relationships 1 and 2, and $\gg$ is a shift operation.

Embodiment 4

This embodiment describes an example of the first condition. According to the different manners of determining the chroma prediction error, it can be divided into the following two cases.

Case 1: the chroma prediction error of the pixel point by the first model is determined according to a ratio between a first chroma prediction value and a true chroma value of the pixel point.

For example, the chroma prediction error of the pixel point by the first model can be determined by a fifth formula, which is:

$$A(i,j) = pred_C(i,j)/C(i,j)$$

where *A(i,j)* is the chroma prediction error of a pixel point at coordinates *(i,j)* by the first model, $pred_C(i,j)$ is the chroma prediction value of the pixel point at the coordinates *(i,j)*, and *C(i,j)* is the true chroma value of the pixel point at the coordinates *(i,j)*.

In the case 1, the first threshold range can be defined in the following three forms: the first threshold range is a numerical range between -threadhold1 and threadhold1, including -threadholdl and threadhold1; the first threshold range is a numerical range greater than threadhold1; the first threshold range is a numerical range less than -threadhold1. In this case, threadhold1 is used to constrain an offset percentage of distribution points representing the correlation between the chroma value and the luma value relative to the linear function fitted by the first model. The first condition is any of the following:

the chroma prediction error of the pixel point by the first model satisfies a first formula and a second formula;
the chroma prediction error of the pixel point by the first model satisfies a third formula;
the chroma prediction error of the pixel point by the first model satisfies a fourth formula;
where the first formula is:

$$A(i,j) <= \text{threadhold1};$$

the second formula is:

$$A(i,j) >= \text{-threadhold1};$$

the third formula is:

$$A(i,j) > \text{threadhold1};$$

the fourth formula is:

$$A(i,j) < \text{-threadhold1},$$

where *A(i,j)* is the chroma prediction error of a pixel point at coordinates *(i,j)* by the first model, and threadhold1 is a first threshold.

Case 2: the chroma prediction error of the pixel point by the first model is determined according to a difference between the first chroma prediction value and the true chroma value of the pixel point.

For example, the chroma prediction error of the pixel point by the first model can be determined through a seventh formula, which is:

$$A(i,j) = pred_C(i,j) - C(i,j)$$

where *A(i,j)* is the chroma prediction error of a pixel point at coordinates *(i,j)* by the first model, $pred_C(i,j)$ is the chroma prediction value of the pixel point at the coordinates *(i,j)*, and *C(i,j)* is the true chroma value of the pixel point at the coordinates *(i,j)*.

In the case 2, the first threshold range is values between -threadhold2 and threadhold2. In this case, threadhold2 is used to constrain an offset value of distribution points representing the correlation between the chroma value and the luma value relative to the linear function fitted by the first model. The first condition is that the chroma prediction error of the pixel point by the first model satisfies a sixth formula, which is:

$$\text{Abs}(A(i,j)) >= \text{threadhold2}$$

where *A(i, j)* is the chroma prediction error of a pixel point at coordinates *(i,j)* by the first model, and threadhold2 is a second threshold.

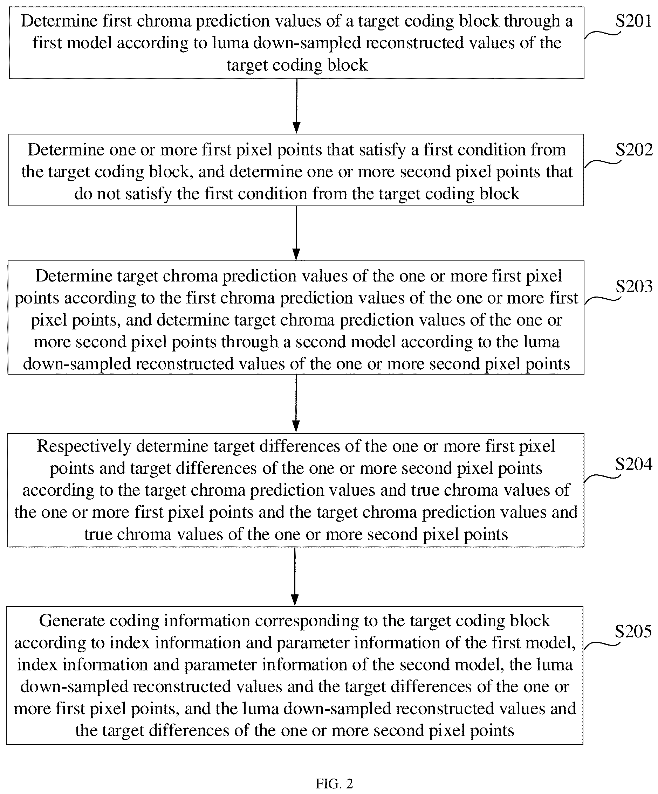

In a second aspect, as shown in FIG. 2, an embodiment of the present disclosure provides a coding method, which includes at least the following steps.

In step S201, first chroma prediction values of a target coding block through a first model are determined according to luma down-sampled reconstructed values of the target coding block.

The first model is configured to determine a chroma prediction value mapped by a luma down-sampled reconstructed value according to a linear mapping relationship.

In step S202, one or more first pixel points that satisfy a first condition are determined from the target coding block, and one or more second pixel points that do not satisfy the first condition are determined from the target coding block.

The first condition includes that a chroma prediction error of a pixel point by the first model is within a first threshold range.

In step S203, target chroma prediction values of the one or more first pixel points are determined according to the first chroma prediction values of the one or more first pixel points, and target chroma prediction values of the one or more second pixel points are determined through a second model according to the luma down-sampled reconstructed values of the one or more second pixel points.

The second model is configured to determine a chroma prediction value mapped by a luma down-sampled reconstructed value according to a nonlinear mapping relationship.

In step 204, target differences of the one or more first pixel points and target differences of the one or more second pixel points are respectively determined according to the target chroma prediction values and true chroma values of the one or more first pixel points and the target chroma prediction values and true chroma values of the one or more second pixel points.

In step S205, coding information corresponding to the target coding block is generated according to index information and parameter information of the first model, index information and parameter information of the second model, the luma down-sampled reconstructed values and the target differences of the one or more first pixel points, and the luma down-sampled reconstructed values and the target differences of the one or more second pixel points.

It can be seen from the above steps that the pixel points in the target coding block are divided into two categories by the first condition, and the target chroma prediction values of the two categories of pixel points are determined by using the first model and the second model respectively, so that the overall prediction accuracy of the target coding block can be improved through the joint model prediction, thus improving the compression effect of the target coding block.

In a possible embodiment, determining the target chroma prediction values of the one or more second pixel points through the second model according to the luma down-sampled reconstructed values of the one or more second pixel points includes:

determining a first prediction error corresponding to the first model according to the first chroma prediction values and the true chroma values of the one or more second pixel points;

determining second chroma prediction values of the one or more second pixel points through the second model according to the luma down-sampled reconstructed value of the one or more second pixel points, and determining a second prediction error corresponding to the second model according to the second chroma prediction values and the true chroma values of the one or more second pixel points;

determining whether the first prediction error is smaller than the second prediction error; and

in response to the first prediction error being not smaller than the second prediction error, determining the target chroma prediction values of the one or more second pixel points according to the second chroma prediction values of the one or more second pixel points;

the method further includes:

in response to the first prediction error being smaller than the second prediction error, determining the target chroma prediction values of the one or more second pixel points according to the first chroma prediction values of the one or more second pixel points.

In a possible embodiment, determining the target chroma prediction values of the one or more first pixel points according to the first chroma prediction values of the one or more first pixel points includes:

adjusting parameters of the first model according to the first chroma prediction values of the one or more first pixel points; and

determining the target chroma prediction values of the one or more first pixel points through the first model with adjusted parameters according to the luma down-sampled reconstructed values of the one or more first pixel points.

In a possible embodiment, determining the target chroma prediction values of the one or more second pixel points through the second model according to the luma down-sampled reconstructed values of the one or more second pixel points includes:

determining third chroma prediction values of the one or more second pixel points through the first model with adjusted parameters according to the luma down-sampled reconstructed values of the one or more second pixel points, and determining a third prediction error corresponding to the first model with adjusted parameters according to the third chroma prediction values and the true chroma values of the one or more second pixel points;

determining fourth chroma prediction values of the one or more second pixel points through the second model according to the luma down-sampled reconstructed values of the one or more second pixel points, and determining a fourth prediction error corresponding to the second model according to the fourth chroma prediction values and the true chroma values of the one or more second pixel points;

determining whether the third prediction error is smaller than the fourth prediction error;

in response to the third prediction error being smaller than the fourth prediction error, determining the target chroma prediction values of the one or more second pixel points according to the third chroma prediction values of the one or more second pixel points; and

in response to the third prediction error being not smaller than the fourth prediction error, determining the target chroma prediction values of the one or more second pixel points according to the fourth chroma prediction values of the one or more second pixel points.

In a possible embodiment, after determining the one or more second pixel points that do not satisfy the first condition from the target coding block, the method further includes:

detecting whether a number of the one or more second pixel points is greater than a number threshold;

in response to the number of the one or more second pixel points being not greater than the number threshold, determining target chroma prediction values of the target coding block according to the first chroma prediction values of the target coding block;

determining target differences of the target coding block according to the target chroma prediction values and true chroma values of the target coding block; and

generating coding information corresponding to the target coding block according to the index information and the parameter information of the first model, and the luma down-sampled reconstructed values and the target differences of the target coding block;

determining the target chroma prediction values of the one or more first pixel points according to the first chroma prediction values of the one or more first pixel points includes:

in response to the number of the one or more second pixel points being greater than the number threshold, determining the target chroma prediction values of the one or more first pixel points according to the first chroma prediction values of the one or more first pixel points;

determining the target chroma prediction values of the one or more second pixel points through the second model according to the luma down-sampled reconstructed values of the one or more second pixel points includes:

in response to the number of the one or more second pixel points being greater than the number threshold, determining the target chroma prediction values of the one or more second pixel points through the second model according to the luma down-sampled reconstructed values of the one or more second pixel points;

respectively determining the target differences of the one or more first pixel points and the target differences of the one or more second pixel points according to the target chroma prediction values and the true chroma values of the one or more first pixel points and the target chroma prediction values and the true chroma values of the one or more second pixel points includes:

in response to the number of the one or more second pixel points being greater than the number threshold, respectively determining the target differences of the one or more first pixel points and the target differences of the one or more second pixel points according to the target chroma prediction values and the true chroma values of the one or more first pixel points and the target chroma prediction values and the true chroma values of the one or more second pixel points;

generating the coding information corresponding to the target coding block according to the index information and the parameter information of the first model, the index information and the parameter information of the second model, the luma down-sampled reconstructed values and the target differences of the one or more first pixel points, and the luma down-sampled reconstructed values and the target differences of the one or more second pixel points includes:

in response to the number of the one or more second pixel points being greater than the number threshold, generating the coding information corresponding to the target coding block according to the index information and the parameter information of the first model, the index information and the parameter information of the second model, the luma down-sampled reconstructed values and the target differences of the one or more first pixel points, and the luma down-sampled reconstructed values and the target differences of the one or more second pixel points.

In a possible embodiment, before determining the target chroma prediction values of the one or more second pixel points through the second model according to the luma down-sampled reconstructed values of the one or more second pixel points, the method further includes:

constructing the second model through a target mapping relationship according to the luma down-sampled reconstructed values and the true chroma values of the one or more second pixel points, where the target mapping relationship is configured to characterize the nonlinear mapping relationship between the luma down-sampled reconstructed value and the chroma prediction value.

In a possible embodiment, constructing the second model through the target mapping relationship according to the luma down-sampled reconstructed values and the true chroma values of the one or more second pixel points includes:

determining a value of each parameter in a target formula according to the luma down-sampled reconstructed values and the true chroma values of the one or more second pixel points, where the target formula is configured to characterize the target mapping relationship; and
constructing the second model according to the target formula and the value of each parameter.

In a possible embodiment, the target formula is as follows:

$$pred_C(i,j) = \alpha_2 \cdot (((rec'_L(i,j))^2 + midValue \gg bitDepth) + \alpha_3 \cdot rec'_L(i,j) + \alpha_4 \cdot midValue$$

where *bitDepth* is a bit depth, *midValue* is a median of the bit depth, $pred_C(i,j)$ is the chroma prediction value of a pixel point at coordinates *(i,j)*, $rec'_L(i,j)$ is the luma down-sampled reconstructed value of the pixel point at the coordinates *(i,j)*, $\alpha_2$, $\alpha_3$, $\alpha_4$ are values of parameters in the second model, and >> is a shift operation.

In a possible embodiment, the chroma prediction error of the pixel point by the first model is determined by any one of:

determining the chroma prediction error of the pixel point by the first model according to a ratio between a first chroma prediction value and a true chroma value of the pixel point;
determining the chroma prediction error of the pixel point by the first model according to a difference between the first chroma prediction value and the true chroma value of the pixel point.

In a possible embodiment, in response to determining the chroma prediction error of the pixel point by the first model according to the ratio between the first chroma prediction value and the true chroma value, the first condition includes any one of:

the chroma prediction error of the pixel point by the first model satisfies a first formula and a second formula;
the chroma prediction error of the pixel point by the first model satisfies a third formula;
the chroma prediction error of the pixel point by the first model satisfies a fourth formula,
where the first formula is:

$$A(i,j) \ \text{<= threadhold1};$$

the second formula is:

$$A(i,j) \ \text{>= -threadhold1};$$

the third formula is:

$$A(i,j) \ \text{> threadhold1};$$

the fourth formula is:

$$A(i,j) \ \text{< -threadhold1},$$

where *A(i,j)* is the chroma prediction error of a pixel point at coordinates *(i,j)* by the first model, and threadhold1 is a first threshold.

In a possible embodiment, determining the chroma prediction error of the pixel point by the first model according to the ratio between the first chroma prediction value and the true chroma value of the pixel point includes:

determining the chroma prediction error of the pixel point by the first model through a fifth formula, where the fifth formula is:

$$A(i,j) = pred_C(i,j)/C(i,j),$$

where $A(i,j)$ is the chroma prediction error of a pixel point at coordinates $(i,j)$ by the first model, $pred_C(i,j)$ is the chroma prediction value of the pixel point at the coordinates $(i,j)$, and $C(i,j)$ is the true chroma value of the pixel point at the coordinates $(i,j)$.

In a possible embodiment, in response to determining the chroma prediction error of the pixel point by the first model according to the difference between the first chroma prediction value and the true chroma value, the first condition includes that the chroma prediction error of the pixel point by the first model satisfies a sixth formula;

where the sixth formula is:

$$\text{Abs}(A(i,j)) >= \text{threadhold2},$$

where $A(i,j)$ is the chroma prediction error of a pixel point at coordinates $(i,j)$ by the first model, and threadhold2 is a second threshold.

In a possible embodiment, determining the chroma prediction error of the pixel point by the first model according to the difference between the first chroma prediction value and the true chroma value of the pixel point includes:

determining the chroma prediction error of the pixel point by the first model through a seventh formula, where the seventh formula is:

$$A(i,j) = pred_C(i,j) - C(i,j),$$

where $A(i,j)$ is the chroma prediction error of a pixel point at coordinates $(i,j)$ by the first model, $pred_C(i,j)$ is the chroma prediction value of the pixel point at the coordinates $(i,j)$, and $C(i,j)$ is the true chroma value of the pixel point at the coordinates $(i,j)$.

In a possible embodiment, the first model is configured to determine the chroma prediction value mapped by the luma down-sampled reconstructed value according to a following linear mapping relationship:

$$pred_C(i,j) = \alpha_0 \cdot rec'_L(i,j) + \alpha_1,$$

where $pred_C(i,j)$ is the chroma prediction value of a pixel point at coordinates $(i,j)$, $rec'_L(i,j)$ is the luma down-sampled reconstructed value of the pixel point at the coordinates $(i,j)$, and $\alpha_0$, $\alpha_1$ are values of parameters in the first model.

In a possible embodiment, a value of each parameter in the first model and/or a value of each parameter in the second model is determined according to an estimated linear minimum mean square error jointly mapped by true chroma values and the luma down-sampled reconstructed values of the target coding block.

It can be understood that the coding method and the decoding method provided in the embodiments of the present disclosure can be executed by a coding apparatus and a decoding apparatus. In the embodiments of the present disclosure, the coding apparatus and the decoding apparatus provided by the embodiments of the present disclosure are explained by taking the coding apparatus and the decoding apparatus respectively executing the coding method and the decoding method as examples.

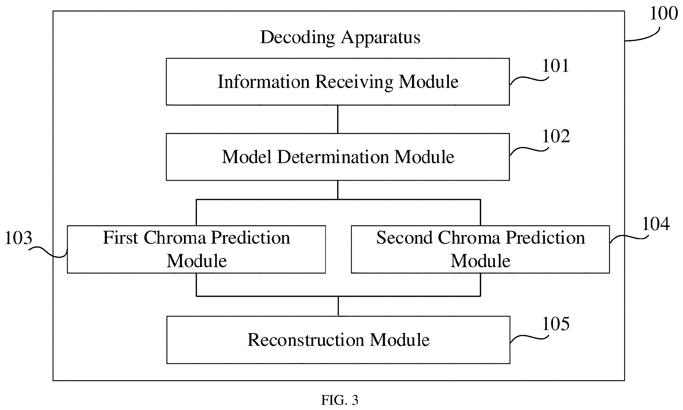

In a third aspect, an embodiment of the present disclosure provides a decoding apparatus. As shown in FIG. 3, the decoding apparatus includes:

an information receiving module 101, configured to receive coding information corresponding to a target coding block, where the coding information at least includes: index information and parameter information of a first model, index information and parameter information of a second model, luma down-sampled reconstructed values and target differences of one or more first pixel points, and luma down-sampled reconstructed values and target differences of one or more second pixel points, the one or more first pixel points are pixel points in the target coding block that satisfy a first condition, the one or more second pixel points are pixel points in the target coding block that do not satisfy the first condition, and the first condition includes that a chroma prediction error of a pixel point by the first model is within a first threshold range;

a model determination module 102, configured to determine the first model and the second model according to the index information and the parameter information of the first model and the index information and the parameter information of the second model, where the first model is configured to determine a chroma prediction value mapped by a luma down-sampled reconstructed value according to a linear mapping relationship, and the second model is configured to determine a chroma prediction value mapped by a luma down-sampled reconstructed value according to a nonlinear mapping relationship;

a first chroma prediction module 103, configured to determine target chroma prediction values of the one or more first pixel points through the first model according to the luma down-sampled reconstructed values of the one or more first pixel points;

a second chroma prediction module 104, configured to determine target chroma prediction values of the one or more second pixel points through the second model according to the luma down-sampled reconstructed values of the one or more second pixel points; and

a reconstruction module 105, configured to determine chroma reconstructed values of the target coding block according to the target chroma prediction values and the target differences of the one or more first pixel points and the target chroma prediction values and the target differences of the one or more second pixel points.

Optionally, the apparatus further includes:

a third chroma prediction module, configured to in response to the one or more second pixel points being first target pixel points, determine target chroma prediction values of the first target pixel points through the first model according to the luma down-sampled reconstructed values of the first target pixel points;

the second chroma prediction module 104 includes:

a fourth chroma prediction module, configured to in response to the one or more second pixel points being second target pixel points, determine target chroma prediction values of the second target pixel points through the second model according to the luma down-sampled reconstructed values of the second target pixel points;

where the first target pixel points are second pixel points of which a first prediction error is smaller than a second prediction error, the second target pixel points are second pixel points of which the first prediction error is not smaller than the second prediction error, the first prediction error is determined according to chroma prediction values of the one or more second pixel points by the first model and true chroma values of the one or more second pixel points, and the second prediction error is determined according to chroma prediction values of the one or more second pixel points by the second model and true chroma values of the one or more second pixel points.

Optionally, the first model is obtained by adjusting parameters of an initial first model according to chroma prediction values of the one or more first pixel points by the initial first model.

Optionally, the apparatus further includes:

a fifth chroma prediction module, configured to in response to the one or more second pixel points being third target pixel points, determine target chroma prediction values of the third target pixel points through the first model according to the luma down-sampled reconstructed values of the third target pixel points;

the second chroma prediction module 104 includes:

a sixth chroma prediction module, configured to in response to the one or more second pixel points being fourth target pixel points, determine target chroma prediction values of the fourth target pixel points through the second model according to the luma down-sampled reconstructed values of the fourth target pixel points;

where the third target pixel points are second pixel points of which a third prediction error is smaller than a fourth prediction error, the fourth target pixel points are second pixel points of which the third prediction error is not smaller than the fourth prediction error, the third prediction error is determined according to chroma prediction values of the one or more second pixel points by the first model and true chroma values of the one or more second pixel points, and the fourth prediction error is determined according to chroma prediction values of the one or more second pixel points by the second model and true chroma values of the one or more second pixel points.

Optionally, the information receiving module 101 includes:

a first information receiving sub-module, configured to receive first coding information corresponding to the target coding block, where the first coding information is generated when a number of the one or more second pixel points is greater than a number threshold, and the first coding information at least includes: the index information and the parameter information of the first model, the index information and the parameter information of the second model, the luma down-sampled reconstructed values and the target differences of the one or more first pixel points, and the luma down-sampled reconstructed values and the target differences of the one or more second pixel points;
the apparatus further includes:

a second information receiving sub-module, configured to in a case where the first coding information is not received and second coding information corresponding to the target coding block is received, determine target chroma prediction values of the target coding block through the first model according to luma down-sampled reconstructed values of the target coding block;
a first chroma reconstruction module, configured to determine the chroma reconstructed values of the target coding block according to the target chroma prediction values and target differences of the target coding block;
where the second coding information is generated when the number of the one or more second pixel points is not greater than the number threshold, and the second coding information at least includes: the index information and the parameter information of the first model, and the luma down-sampled reconstructed values and the target differences of the target coding block.

Optionally, the second model is constructed through a target mapping relationship according to the luma down-sampled reconstructed values and true chroma values of the one or more second pixel points, and the target mapping relationship is configured to characterize the nonlinear mapping relationship between the luma down-sampled reconstructed value and the chroma prediction value.

Optionally, the second model is constructed according to a target formula and a value of each parameter in the target formula, the value of each parameter in the target formula is determined according to the luma down-sampled reconstructed values and the true chroma values of the one or more second pixel points, and the target formula is configured to characterize the target mapping relationship.

Optionally, the target formula is as follows:

$$pred_C(i,j) = \alpha_2 \cdot (((rec'_L(i,j))^2 + midValue \gg bitDepth) + \alpha_3 \cdot rec'_L(i,j) + \alpha_4 \cdot midValue$$

where *bitDepth* is a bit depth, *midValue* is a median of the bit depth, $pred_C(i,j)$ is the chroma prediction value of a pixel point at coordinates *(i,j)*, $rec'_L(i,j)$ is the luma down-sampled reconstructed value of the pixel point at the coordinates *(i,j)*, $\alpha_2$, $\alpha_3$, $\alpha_4$ are values of parameters in the second model, and >> is a shift operation.

Optionally, the chroma prediction error of the pixel point by the first model is determined by any of the following:

determining the chroma prediction error of the pixel point by the first model according to a ratio between a first chroma prediction value of the pixel point by the first model and a true chroma value;
determining the chroma prediction error of the pixel point by the first model according to a difference between the first chroma prediction value of the pixel point by the first model and the true chroma value.

Optionally, in response to determining the chroma prediction error of the pixel point by the first model according to the ratio between the first chroma prediction value and the true chroma value, the first condition includes any one of:

the chroma prediction error of the pixel point by the first model satisfies a first formula and a second formula;
the chroma prediction error of the pixel point by the first model satisfies a third formula;
the chroma prediction error of the pixel point by the first model satisfies a fourth formula,
where the first formula is:

$$A(i,j) <= \text{threadhold1};$$

the second formula is:

$$A(i,j) >= \text{-threadhold1};$$

the third formula is:

$$A(i,j) > \text{threadhold1};$$

the fourth formula is:

$$A(i,j) < \text{-threadhold1},$$

where $A(i,j)$ is the chroma prediction error of a pixel point at coordinates $(i,j)$ by the first model, and threadhold1 is a first threshold.

Optionally, determining the chroma prediction error of the pixel point by the first model according to the ratio between the first chroma prediction value of the pixel point by the first model and the true chroma value includes:

determining the chroma prediction error of the pixel point by the first model through a fifth formula,
where the fifth formula is:

$$A(i,j) = pred_C(i,j)/C(i,j),$$

where $A(i,j)$ is the chroma prediction error of a pixel point at coordinates $(i,j)$ by the first model, $pred_C(i,j)$ is the chroma prediction value of the pixel point at the coordinates $(i,j)$, and $C(i,j)$ is the true chroma value of the pixel point at the coordinates $(i,j)$.

Optionally, in response to determining the chroma prediction error of the pixel point by the first model according to the difference between the first chroma prediction value and the true chroma value, the first condition includes that the chroma prediction error of the pixel point by the first model satisfies a sixth formula;

where the sixth formula is:

$$\text{Abs}(A(i,j)) >= \text{threadhold2},$$

where $A(i, j)$ is the chroma prediction error of a pixel point at coordinates $(i,j)$ by the first model, and threadhold2 is a second threshold.

Optionally, determining the chroma prediction error of the pixel point by the first model according to the difference between the first chroma prediction value of the pixel point by the first model and the true chroma value includes:

determining the chroma prediction error of the pixel point by the first model through a seventh formula,
where the seventh formula is:

$$A(i,j) = pred_C(i,j) - C(i,j),$$

where $A(i,j)$ is the chroma prediction error of a pixel point at coordinates $(i,j)$ by the first model, $pred_C(i,j)$ is the chroma prediction value of the pixel point at the coordinates $(i,j)$, and $C(i,j)$ is the true chroma value of the pixel point at the coordinates $(i,j)$.

Optionally, the first model is configured to determine the chroma prediction value mapped by the luma down-sampled reconstructed value according to a following linear mapping relationship:

$$pred_C(i,j) = \alpha_0 \cdot rec_L'(i,j) + \alpha_1,$$

where $pred_C(i,j)$ is the chroma prediction value of a pixel point at coordinates $(i,j)$, $rec_L'(i,j)$ is the luma down-sampled reconstructed value of the pixel point at the coordinates $(i,j)$, and $\alpha_0$, $\alpha_1$ are values of parameters in the first model.

Optionally, a value of each parameter in the first model and/or a value of each parameter in the second model is determined according to an estimated linear minimum mean square error jointly mapped by true chroma values and luma down-sampled reconstructed values of the target coding block.

The decoding apparatus provided in the embodiments of the present disclosure can implement various processes of the decoding method described in the first aspect and achieve the same technical effect. To avoid repetition, it will not be repeated here.

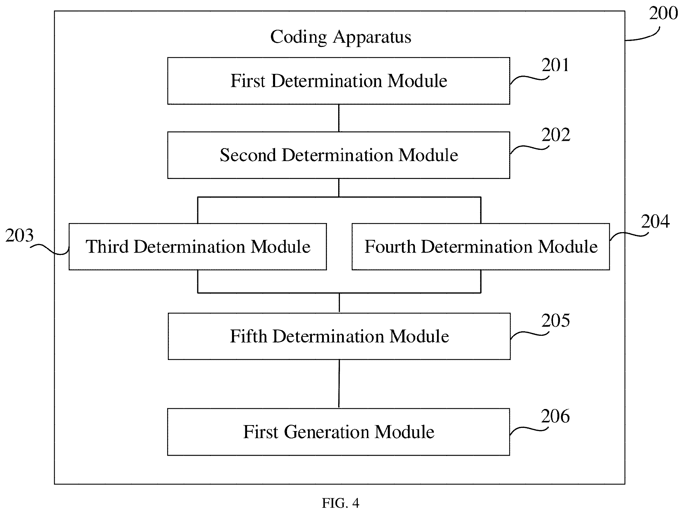

In a fourth aspect, an embodiment of the present disclosure provides a coding apparatus. As shown in FIG. 4, the coding apparatus includes:

a first determination module 201, configured to determine first chroma prediction values of a target coding block through a first model according to luma down-sampled reconstructed values of the target coding block, where the first model is configured to determine a chroma prediction value mapped by a luma down-sampled reconstructed value according to a linear mapping relationship;

a second determination module 202, configured to determine one or more first pixel points that satisfy a first condition from the target coding block, and determine one or more second pixel points that do not satisfy the first condition from the target coding block, where the first condition includes that a chroma prediction error of a pixel point by the first model is within a first threshold range;

a third determination module 203, configured to determine target chroma prediction values of the one or more first pixel points according to the first chroma prediction values of the one or more first pixel points;

a fourth determination module 204, configured to determine target chroma prediction values of the one or more second pixel points through a second model according to the luma down-sampled reconstructed values of the one or more second pixel points, where the second model is configured to determine a chroma prediction value mapped by a luma down-sampled reconstructed value according to a nonlinear mapping relationship;

a fifth determination module 205, configured to respectively determine target differences of the one or more first pixel points and target differences of the one or more second pixel points according to the target chroma prediction values and true chroma values of the one or more first pixel points and the target chroma prediction values and true chroma values of the one or more second pixel points; and

a first generation module 206, configured to generate coding information corresponding to the target coding block according to index information and parameter information of the first model, index information and parameter information of the second model, the luma down-sampled reconstructed values and the target differences of the one or more first pixel points, and the luma down-sampled reconstructed values and the target differences of the one or more second pixel points.

Optionally, the fourth determination module 204 includes:

a first determination sub-module, configured to determine a first prediction error corresponding to the first model according to the first chroma prediction values and the true chroma values of the one or more second pixel points;

a second determination sub-module, configured to determine second chroma prediction values of the one or more second pixel points through the second model according to the luma down-sampled reconstructed value of the one or more second pixel points, and determine a second prediction error corresponding to the second model according to the second chroma prediction values and the true chroma values of the one or more second pixel points;

a third determination sub-module, configured to determine whether the first prediction error is smaller than the second prediction error;

a fourth definite sub-module, configured to in response to the first prediction error being not smaller than the second prediction error, determine the target chroma prediction values of the one or more second pixel points according to the second chroma prediction values of the one or more second pixel points;

the apparatus further includes:

a sixth determination module, configured to in response to the first prediction error being smaller than the second prediction error, determine the target chroma prediction values of the one or more second pixel points according to the first chroma prediction values of the one or more second pixel points.

Optionally, the third determination module 203 includes:

a fifth determination sub-module, configured to adjust parameters of the first model according to the first chroma prediction values of the one or more first pixel points;

a sixth determination sub-module, configured to determine the target chroma prediction values of the one or more first pixel points through the first model with adjusted parameters according to the luma down-sampled reconstructed values of the one or more first pixel points.

Optionally, the fourth determination module 204 includes:

a seventh determination sub-module, configured to determine third chroma prediction values of the one or more second pixel points through the first model with adjusted parameters according to the luma down-sampled reconstructed values of the one or more second pixel points, and determine a third prediction error corresponding to the first model with adjusted parameters according to the third chroma prediction values and the true chroma values of the one or more second pixel points;

an eighth determination sub-module, configured to determine fourth chroma prediction values of the one or more second pixel points through the second model according to the luma down-sampled reconstructed values of the one or more second pixel points, and determine a fourth prediction error corresponding to the second model according to the fourth chroma prediction values and the true chroma values of the one or more second pixel points;

a ninth definite sub-module, configured to determine whether the third prediction error is smaller than the fourth prediction error;

a tenth definite sub-module, configured to in response to the third prediction error being smaller than the fourth prediction error, determine the target chroma prediction values of the one or more second pixel points according to the third chroma prediction values of the one or more second pixel points;

an eleventh determination sub-module, configured to in response to the third prediction error being not smaller than the fourth prediction error, determine the target chroma prediction values of the one or more second pixel points according to the fourth chroma prediction values of the one or more second pixel points.

Optionally, after determining the one or more second pixel points that do not satisfy the first condition from the target coding block, the apparatus further includes:

a first detection module, configured to detect whether a number of the one or more second pixel points is greater than a number threshold;

a seventh determination module, configured to in response to the number of the one or more second pixel points being not greater than the number threshold, determining target chroma prediction values of the target coding block according to the first chroma prediction values of the target coding block;

an eighth determination module, configured to determine target differences of the target coding block according to the target chroma prediction values and true chroma values of the target coding block;

a ninth determination module, configured to generate coding information corresponding to the target coding block according to the index information and the parameter information of the first model, and the luma down-sampled reconstructed values and the target differences of the target coding block;

the third determination module 203 includes:

a twelfth determination sub-module, configured to in response to the number of the one or more second pixel points being greater than the number threshold, determine the target chroma prediction values of the one or more first pixel points according to the first chroma prediction values of the one or more first pixel points;

the fourth determination module 204 includes:

a thirteenth determination sub-module, configured to in response to the number of the one or more second pixel points being greater than the number threshold, determine the target chroma prediction values of the one or more second pixel points through the second model according to the luma down-sampled reconstructed values of the one or more second pixel points;

the fifth determination module 205 includes:

a fourteenth definite sub-module, configured to in response to the number of the one or more second pixel points being greater than the number threshold, respectively determine the target differences of the one or more first pixel points and the target differences of the one or more second pixel points according to the target chroma prediction values and the true chroma values of the one or more first pixel points and the target chroma prediction values and the true chroma values of the one or more second pixel points;

the first generation module 206 includes:

a first generation sub-module, configured to in response to the number of the one or more second pixel points being greater than the number threshold, generate the coding information corresponding to the target coding block according to the index information and the parameter information of the first model, the index information and the parameter information of the second model, the luma down-sampled reconstructed values and the target differences of the one or more first pixel points, and the luma down-sampled reconstructed values and the target differences of the one or more second pixel points.

Optionally, the apparatus further includes:

a first construction module, configured to construct the second model through a target mapping relationship according to the luma down-sampled reconstructed values and the true chroma values of the one or more second pixel points, where the target mapping relationship is configured to characterize the nonlinear mapping relationship between the luma down-sampled reconstructed value and the chroma prediction value.

Optionally, the first construction module includes:

a first construction sub-module, configured to determine a value of each parameter in a target formula according to the luma down-sampled reconstructed values and the true chroma values of the one or more second pixel points, where the target formula is configured to characterize the target mapping relationship; and
a second construction sub-module, configured to construct the second model according to the target formula and the value of each parameter.

Optionally, the target formula is as follows:

$$pred_C(i,j) = \alpha_2 \cdot (((rec'_L(i,j))^2 + midValue \gg bitDepth) + \alpha_3 \cdot rec'_L(i,j) + \alpha_4 \cdot midValue$$

where *bitDepth* is a bit depth, *midValue* is a median of the bit depth, $pred_C(i,j)$ is the chroma prediction value of a pixel point at coordinates *(i,j)*, $rec'_L(i,j)$ is the luma down-sampled reconstructed value of the pixel point at the coordinates *(i,j)*, $\alpha_2$, $\alpha_3$, $\alpha_4$ are values of parameters in the second model, and >> is a shift operation.

Optionally, the chroma prediction error of the pixel point by the first model is determined by any of the following:

determining the chroma prediction error of the pixel point by the first model according to a ratio between a first chroma prediction value and a true chroma value of the pixel point;
determining the chroma prediction error of the pixel point by the first model according to a difference between the first chroma prediction value and the true chroma value of the pixel point.

Optionally, in response to determining the chroma prediction error of the pixel point by the first model according to the ratio between the first chroma prediction value and the true chroma value of the pixel point, the first condition includes any one of:

the chroma prediction error of the pixel point by the first model satisfies a first formula and a second formula;
the chroma prediction error of the pixel point by the first model satisfies a third formula;
the chroma prediction error of the pixel point by the first model satisfies a fourth formula,
where the first formula is:

$$A(i,j) \ <= \text{threadhold1};$$

the second formula is:

$$A(i,j) \ >= \text{-threadhold1};$$

the third formula is:

$$A(i,j) \ > \text{threadhold1};$$

the fourth formula is:

$$A(i,j) \ < \text{-threadhold1},$$

where *A(i,j)* is the chroma prediction error of a pixel point at coordinates *(i,j)* by the first model, and threadhold1 is a first threshold.

Optionally, determining the chroma prediction error of the pixel point by the first model according to the ratio between the first chroma prediction value and the true chroma value of the pixel point includes:

determining the chroma prediction error of the pixel point by the first model through a fifth formula,
where the fifth formula is:

$$A(i,j) = pred_C(i,j)/C(i,j),$$

where *A(i,j)* is the chroma prediction error of a pixel point at coordinates *(i,j)* by the first model, $pred_C$*(i,j)* is the chroma prediction value of the pixel point at the coordinates *(i,j)*, and *C(i,j)* is the true chroma value of the pixel point at the coordinates *(i,j)*.

Optionally, in response to determining the chroma prediction error of the pixel point by the first model according to the difference between the first chroma prediction value and the true chroma value of the pixel point, the first condition includes that the chroma prediction error of the pixel point by the first model satisfies a sixth formula;

where the sixth formula is:

$$\text{Abs}(A(i,j)) >= \text{threadhold2},$$

where *A(i, j)* is the chroma prediction error of a pixel point at coordinates *(i,j)* by the first model, and threadhold2 is a second threshold.

Optionally, determining the chroma prediction error of the pixel point by the first model according to the difference between the first chroma prediction value and the true chroma value of the pixel point includes:

determining the chroma prediction error of the pixel point by the first model through a seventh formula,
where the seventh formula is:

$$A(i,j) = pred_C(i,j) - C(i,j),$$

where *A(i,j)* is the chroma prediction error of a pixel point at coordinates *(i,j)* by the first model, $pred_C$*(i,j)* is the chroma prediction value of the pixel point at the coordinates *(i,j)*, and *C(i,j)* is the true chroma value of the pixel point at the coordinates *(i, j)*.

Optionally, the first model is configured to determine the chroma prediction value mapped by the luma down-sampled reconstructed value according to a following linear mapping relationship:

$$pred_C(i,j) = \alpha_0 \cdot rec'_L(i,j) + \alpha_1,$$

where $pred_C$*(i,j)* is the chroma prediction value of a pixel point at coordinates *(i,j)*, $rec'_L(i,j)$ is the luma down-sampled reconstructed value of the pixel point at the coordinates *(i,j)*, and $\alpha_0$, $\alpha_1$ are values of parameters in the first model.

Optionally, a value of each parameter in the first model and/or a value of each parameter in the second model is determined according to an estimated linear minimum mean square error jointly mapped by true chroma values and the luma down-sampled reconstructed values of the target coding block.

The coding apparatus provided in the embodiments of the present disclosure can implement various processes of the coding method described in the second aspect and achieve the same technical effect. To avoid repetition, it will not be repeated here.

The apparatus embodiments described above are only schematic, the units illustrated as separated parts may be or may not be separated physically, and the parts shown in unit may be or may not be a physical unit. That is, the parts may be located at one place or distributed in multiple network units. Some or all of the modules can be selected according to actual needs to achieve the purpose of the embodiments. A person skilled in the art can understand and implement without making creative efforts.

The various component embodiments of the present disclosure can be implemented by hardware, or implemented by software modules operating on one or more processors, or implemented by the combination thereof. A person skilled in the art should understand that, in practice, a microprocessor or a digital signal processor (DSP) may be used to realize some or all of the functions of some or all of the components in the computing processing device according to the embodiments of the present disclosure. The present disclosure may further be implemented as a device or apparatus program (for example, computer program and computer program product) for executing some or all of the methods as described herein. Such program for implementing the present disclosure may be stored in a computer readable medium, or have a form of one or more signals. Such signal may be downloaded from internet websites, or be provided in a carrier, or be provided in other manners.

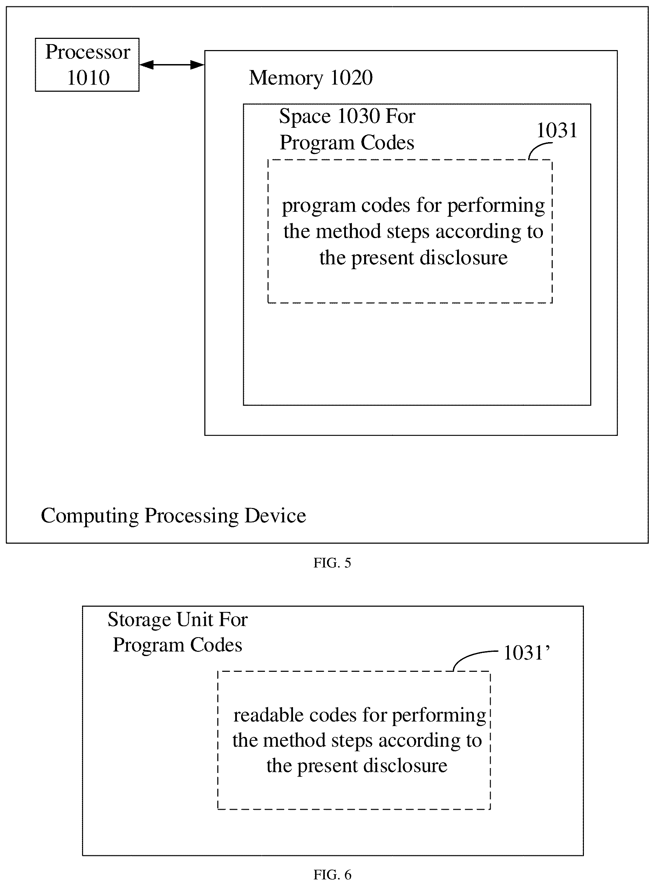

For example, FIG. 5 illustrates a block diagram of a computing processing device that can implement the methods according the present disclosure. Traditionally, the computing processing device includes a processor 1010 and a computer program product or a computer readable medium in form of a memory 1020. The memory 1020 could be an electronic memory such as a flash memory, an electrically erasable programmable read-only memory (EEPROM), an EPROM, a hard disk or a ROM. The memory 1020 has a memory space 1030 for executing program codes 1031 of any steps in the above methods. For example, the memory space 1030 for the program codes may include respective program codes 1031 for implementing the respective steps in the methods as mentioned above. These program codes may be read from and/or be written into one or more computer program products. These computer program products include program code carriers such as hard disk, compact disk (CD), memory card or floppy disk. These computer program products are usually portable or stable memory cells as shown in reference FIG. 6. The memory cells may be provided with memory sections, memory spaces, etc., arranged similar to the memory 1020 of the computing processing device as shown in FIG. 5. The program codes may be compressed for example in an appropriate form. Usually, the memory cell includes computer readable codes 1031', which are codes that can be read by a processor such as 1010. When executed by the computing processing device, these codes cause the computing processing device to perform various steps in the methods described above.

An embodiment of the present disclosure also provides a decoding device, including one or more processors and a memory, where the memory stores a program or instructions executable on the one or more processors, and the program or the instructions, when executed by the one or more processors, implement the various processes of the decoding method embodiments described above and achieve the same technical effect. To avoid repetition, it will not be repeated here.

An embodiment of the present disclosure also provides a coding device, including one or more processors and a memory, where the memory stores a program or instructions executable on the one or more processors, and the program or the instructions, when executed by the one or more processors, implement the various processes of the above coding method embodiments and achieve the same technical effects. To avoid repetition, it will not be repeated here.

An embodiment of the present disclosure also provides a readable storage medium on which a program or instructions are stored. When the program or instructions are executed by a processor, the various processes of the decoding method embodiments or the coding method embodiments described above can be implemented, and the same technical effect can be achieved. To avoid repetition, it will not be repeated here.

The processor is the processor in the terminal device described in the above embodiments. The readable storage medium includes a computer-readable storage medium such as a read-only memory (ROM), a random access memory (RAM), a magnetic disk or an optical disk.

An embodiment of the present disclosure further provides a chip, which includes a processor and a communication interface. The communication interface is coupled to the processor, and the processor is used to run a program or instructions to implement the various processes of the decoding method embodiments or the coding method embodiments described above, and the same technical effect can be achieved. To avoid repetition, it will not be repeated here.

It should be understood that the chip mentioned in the embodiments of the present disclosure can also be referred to as a system level chip, a system chip, a chip system, or an on-chip system chip, etc.

An embodiment of the present disclosure further provides a computer program/program product, which is stored in a storage medium and executed by at least one processor to implement the various processes of the decoding method embodiments or the coding method embodiments described above, and can achieve the same technical effect. To avoid repetition, it will not be repeated here.

An embodiment of the present disclosure further provides a coding and decoding system, including a coding device and a decoding device. The decoding apparatus is used to perform the steps of the decoding method as described in the first aspect, and the coding apparatus is used to perform the steps of the coding method as described in the second aspect.

It should be noted that in this specification, the term "include", "comprise", or any other variant thereof is intended to cover a non-exclusive inclusion, so that a process, method, article, or apparatus including a series of elements includes not only those elements, but also other elements not expressly listed, or elements inherent to such a process, method, article, or apparatus. Without more restrictions, the elements defined by the sentence "including a . . . " do not exclude the existence of other identical elements in the process, method, article, or apparatus including the elements. In addition, it should be noted that, the scope of the methods and apparatuses in the implementations of the present disclosure is not limited to performing the functions in the order shown or discussed, but may further include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions in the foregoing implementations, a person skilled in the art may clearly learn that the method according to the foregoing embodiment may be implemented by means of software plus a necessary universal hardware platform, or certainly, by using hardware. However, in many cases, the former is a preferred implementation.

Based on such an understanding, the technical solutions of the present disclosure essentially, or a part contributing to the prior art, may be presented in a form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present disclosure.

The embodiments of the present disclosure have been described above with reference to the accompanying drawings, but the present disclosure is not limited to the foregoing specific implementations. The foregoing specific implementations are only illustrative instead of restrictive. Under the inspiration of the present disclosure, without departing from the purpose of the present disclosure and the scope of protection of the claims, a person of ordinary skill in the art can still make many forms, which all fall within the protection of the present disclosure.

"An embodiment", "embodiments" or "one or more embodiments" mentioned in the present disclosure means that the specific features, structures or performances described in combination with the embodiments would be included in at least one embodiment of the present disclosure. Moreover, it should be noted that, the wording "in an embodiment" herein may not necessarily refer to the same embodiment.

Many details are discussed in the specification provided herein. However, it should be understood that the embodiments of the present disclosure can be implemented without these specific details. In some examples, the well-known methods, structures and technologies are not shown in detail so as to avoid an unclear understanding of the description.

In the claims, any reference symbol between parentheses should not be constructed as a limitation on the claims. The word "comprising" does not exclude the presence of components or steps not listed in the claims. The word "a/an" or "one" before a component does not exclude the existence of multiple such components. The present disclosure can be achieved through hardware comprising several different components and through appropriately programmed computers. Among the unit claims that list several devices, several of these devices can be specifically embodied through the same hardware item. The use of words such as first, second, and third does not indicate any order. These words can be interpreted as names.

Finally, it should be noted that the above embodiments are only used to illustrate the technical solution disclosed herein, and not to limit it. Although detailed explanations of the present disclosure have been provided with reference to the aforementioned embodiments, persons skilled in the art should understand that they can still modify the technical solutions recorded in the aforementioned embodiments, or equivalently replace some of the technical features therein. And these modifications or replacements do not make the essence of the corresponding technical solutions deviate from the spirit and scope of the technical solutions disclosed in the present disclosure.

**Claims**

1. A decoding method, comprising:

receiving coding information corresponding to a target coding block, wherein the coding information at least comprises: index information and parameter information of a first model, index information and parameter information of a second model, luma down-sampled reconstructed values and target differences of one or more first pixel points, and luma down-sampled reconstructed values and target differences of one or more second pixel points, the one or more first pixel points are pixel points in the target coding block that satisfy a first condition, the one or more second pixel points are pixel points in the target coding block that do not satisfy the first condition, and the first condition comprises that a chroma prediction error of a pixel point by the first model is within a first threshold range;
determining the first model and the second model according to the index information and the parameter information of the first model and the index information and the parameter information of the second model, wherein the first model is configured to determine a chroma prediction value mapped by a luma down-sampled reconstructed value according to a linear mapping relationship, and the second model is configured to determine a chroma prediction value mapped by a luma down-sampled reconstructed value according to a nonlinear mapping relationship;
determining target chroma prediction values of the one or more first pixel points through the first model according to the luma down-sampled reconstructed values of the one or more first pixel points;
determining target chroma prediction values of the one or more second pixel points through the second model according to the luma down-sampled reconstructed values of the one or more second pixel points; and
determining chroma reconstructed values of the target coding block according to the target chroma prediction values and the target differences of the one or more first pixel points and the target chroma prediction values and the target differences of the one or more second pixel points.

2. The method according to claim 1, further comprising:

in response to the one or more second pixel points being first target pixel points, determining target chroma prediction values of the first target pixel points through the first model according to the luma down-sampled reconstructed values of the first target pixel points;
determining the target chroma prediction values of the one or more second pixel points through the second model according to the luma down-sampled reconstructed values of the one or more second pixel points comprises:

in response to the one or more second pixel points being second target pixel points, determining target chroma prediction values of the second target pixel points through the second model according to the luma down-sampled reconstructed values of the second target pixel points;
wherein the first target pixel points are second pixel points of which a first prediction error is smaller than a second prediction error, the second target pixel points are second pixel points of which the first prediction error is not smaller than the second prediction error, the first prediction error is determined according to chroma prediction values of the one or more second pixel points by the first model and true chroma values of the one or more second pixel points, and the second prediction error is determined according to chroma prediction values of the one or more second pixel points by the second model and true chroma values of the one or more second pixel points.

3. The method according to claim 1, wherein the first model is obtained by adjusting parameters of an initial first model according to chroma prediction values of the one or more first pixel points by the initial first model.

4. The method according to claim 3, further comprising:

in response to the one or more second pixel points being third target pixel points, determining target chroma prediction values of the third target pixel points through the first model according to the luma down-sampled reconstructed values of the third target pixel points;
determining the target chroma prediction values of the one or more second pixel points through the second model according to the luma down-sampled reconstructed values of the one or more second pixel points comprises:

in response to the one or more second pixel points being fourth target pixel points, determining target chroma prediction values of the fourth target pixel points through the second model according to the luma down-sampled reconstructed values of the fourth target pixel points;
wherein the third target pixel points are second pixel points of which a third prediction error is smaller than a fourth prediction error, the fourth target pixel points are second pixel points of which the third prediction error is not smaller than the fourth prediction error, the third prediction error is determined according to chroma prediction values of the one or more second pixel points by the first model and true chroma values of the one or more second pixel points, and the fourth prediction error is determined according to chroma prediction values of the one or more second pixel points by the second model and true chroma values of the one or more second pixel points.

5. The method according to claim 1, wherein receiving the coding information corresponding to the target coding block comprises:

receiving first coding information corresponding to the target coding block, wherein the first coding information is generated when a number of the one or more second pixel points is greater than a number threshold, and the first coding information at least comprises: the index information and the parameter information of the first model, the index information and the parameter information of the second model, the luma down-sampled reconstructed values and the target differences of the one or more first pixel points, and the luma down-sampled reconstructed values and the target differences of the one or more second pixel points;
the method further comprises:

in a case where the first coding information is not received and second coding information corresponding to the target coding block is received, determining target chroma prediction values of the target coding block through the first model according to luma down-sampled reconstructed values of the target coding block; and determining the chroma reconstructed values of the target coding block according to the target chroma prediction values and target differences of the target coding block;
wherein the second coding information is generated when the number of the one or more second pixel points is not greater than the number threshold, and the second coding information at least comprises: the index information and the parameter information of the first model, and the luma down-sampled reconstructed values and the target differences of the target coding block.

6. The method according to claim 1, wherein the second model is constructed through a target mapping relationship according to the luma down-sampled reconstructed values and true chroma values of the one or more second pixel points, and the target mapping relationship is configured to characterize the nonlinear mapping relationship between the luma down-sampled reconstructed value and the chroma prediction value.

7. The method according to claim 6, wherein the second model is constructed according to a target formula and a value of each parameter in the target formula, the value of each parameter in the target formula is determined according to the luma down-sampled reconstructed values and the true chroma values of the one or more second pixel points, and the target formula is configured to characterize the target mapping relationship.

8. The method according to claim 7, wherein the target formula is as follows:

$$pred_C(i,j) = \alpha_2 \cdot (((rec_L'(i,j))^2 + midValue \gg bitDepth) + \alpha_3 \cdot rec_L'(i,j) + \alpha_4 \cdot midValue$$

wherein *bitDepth* is a bit depth, *midValue* is a median of the bit depth, $pred_C(i,j)$ is the chroma prediction value of a pixel point at coordinates *(i,j)*, $rec_L'(i,j)$ is the luma down-sampled reconstructed value of the pixel point at the coordinates *(i,j)*, $\alpha_2$, $\alpha_3$, $\alpha_4$ are values of parameters in the second model, and >> is a shift operation.

9. The method according to claim 1, wherein the chroma prediction error of the pixel point by the first model is determined by any one of:

determining the chroma prediction error of the pixel point by the first model according to a ratio between a first chroma prediction value of the pixel point by the first model and a true chroma value;
determining the chroma prediction error of the pixel point by the first model according to a difference between the first chroma prediction value of the pixel point by the first model and the true chroma value.

10. The method according to claim 9, wherein in response to determining the chroma prediction error of the pixel point by the first model according to the ratio between the first chroma prediction value and the true chroma value, the first condition comprises any one of:

the chroma prediction error of the pixel point by the first model satisfies a first formula and a second formula;
the chroma prediction error of the pixel point by the first model satisfies a third formula;
the chroma prediction error of the pixel point by the first model satisfies a fourth formula,
wherein the first formula is:

$$A(i,j) \; <= \text{threadhold1};$$

the second formula is:

$$A(i,j) \; >= \text{-threadhold1};$$

the third formula is:

$$A(i,j) \; > \text{threadhold1};$$

the fourth formula is:

$$A(i,j) \; < \text{-threadhold1},$$

wherein *A(i,j)* is the chroma prediction error of a pixel point at coordinates *(i,j)* by the first model, and threadhold1 is a first threshold.

11. The method according to claim 9, wherein determining the chroma prediction error of the pixel point by the first model according to the ratio between the first chroma prediction value of the pixel point by the first model and the true chroma value comprises:

   determining the chroma prediction error of the pixel point by the first model through a fifth formula, wherein the fifth formula is:

$$A(i,j) = pred_C(i,j)/C(i,j),$$

   wherein $A(i,j)$ is the chroma prediction error of a pixel point at coordinates $(i,j)$ by the first model, $pred_C(i,j)$ is the chroma prediction value of the pixel point at the coordinates $(i, j)$, and $C(i, j)$ is the true chroma value of the pixel point at the coordinates $(i,j)$.

12. The method according to claim 9, wherein in response to determining the chroma prediction error of the pixel point by the first model according to the difference between the first chroma prediction value and the true chroma value, the first condition comprises that the chroma prediction error of the pixel point by the first model satisfies a sixth formula;

   wherein the sixth formula is:

$$\mathrm{Abs}(A(i,j)) >= \mathrm{threadhold2},$$

   wherein $A(i, j)$ is the chroma prediction error of a pixel point at coordinates $(i, j)$ by the first model, and threadhold2 is a second threshold.

13. The method according to claim 9, wherein determining the chroma prediction error of the pixel point by the first model according to the difference between the first chroma prediction value of the pixel point by the first model and the true chroma value comprises:

   determining the chroma prediction error of the pixel point by the first model through a seventh formula, wherein the seventh formula is:

$$A(i,j) = pred_C(i,j) - C(i,j),$$

   wherein $A(i,j)$ is the chroma prediction error of a pixel point at coordinates $(i,j)$ by the first model, $pred_C(i,j)$ is the chroma prediction value of the pixel point at the coordinates $(i, j)$, and $C(i, j)$ is the true chroma value of the pixel point at the coordinates $(i,j)$.

14. The method according to any one of claims 1 to 13, wherein the first model is configured to determine the chroma prediction value mapped by the luma down-sampled reconstructed value according to a following linear mapping relationship:

$$pred_C(i,j) = \alpha_0 \cdot rec_L'(i,j) + \alpha_1,$$

   wherein $pred_C(i,j)$ is the chroma prediction value of a pixel point at coordinates $(i,j)$, $rec_L'(i,j)$ is the luma down-sampled reconstructed value of the pixel point at the coordinates $(i,j)$, and $\alpha_0$, $\alpha_1$ are values of parameters in the first model.

15. The method according to any one of claims 1 to 13, wherein a value of each parameter in the first model and/or a value of each parameter in the second model is determined according to an estimated linear minimum mean square error jointly mapped by true chroma values and luma down-sampled reconstructed values of the target coding block.

16. A coding method, comprising:

   determining first chroma prediction values of a target coding block through a first model according to luma down-sampled reconstructed values of the target coding block, wherein the first model is configured to determine a chroma prediction value mapped by a luma down-sampled reconstructed value according to a linear mapping

EP 4 697 714 A1

relationship;

determining one or more first pixel points that satisfy a first condition from the target coding block, and determining one or more second pixel points that do not satisfy the first condition from the target coding block, wherein the first condition comprises that a chroma prediction error of a pixel point by the first model is within a first threshold range;

determining target chroma prediction values of the one or more first pixel points according to the first chroma prediction values of the one or more first pixel points;

determining target chroma prediction values of the one or more second pixel points through a second model according to the luma down-sampled reconstructed values of the one or more second pixel points, wherein the second model is configured to determine a chroma prediction value mapped by a luma down-sampled reconstructed value according to a nonlinear mapping relationship;

respectively determining target differences of the one or more first pixel points and target differences of the one or more second pixel points according to the target chroma prediction values and true chroma values of the one or more first pixel points and the target chroma prediction values and true chroma values of the one or more second pixel points; and

generating coding information corresponding to the target coding block according to index information and parameter information of the first model, index information and parameter information of the second model, the luma down-sampled reconstructed values and the target differences of the one or more first pixel points, and the luma down-sampled reconstructed values and the target differences of the one or more second pixel points.

17. The method according to claim 16, wherein determining the target chroma prediction values of the one or more second pixel points through the second model according to the luma down-sampled reconstructed values of the one or more second pixel points comprises:

determining a first prediction error corresponding to the first model according to the first chroma prediction values and the true chroma values of the one or more second pixel points;

determining second chroma prediction values of the one or more second pixel points through the second model according to the luma down-sampled reconstructed value of the one or more second pixel points, and determining a second prediction error corresponding to the second model according to the second chroma prediction values and the true chroma values of the one or more second pixel points;

determining whether the first prediction error is smaller than the second prediction error; and

in response to the first prediction error being not smaller than the second prediction error, determining the target chroma prediction values of the one or more second pixel points according to the second chroma prediction values of the one or more second pixel points;

the method further comprises:

in response to the first prediction error being smaller than the second prediction error, determining the target chroma prediction values of the one or more second pixel points according to the first chroma prediction values of the one or more second pixel points.

18. The method according to claim 17, wherein determining the target chroma prediction values of the one or more first pixel points according to the first chroma prediction values of the one or more first pixel points comprises:

adjusting parameters of the first model according to the first chroma prediction values of the one or more first pixel points; and

determining the target chroma prediction values of the one or more first pixel points through the first model with adjusted parameters according to the luma down-sampled reconstructed values of the one or more first pixel points.

19. The method according to claim 18, wherein determining the target chroma prediction values of the one or more second pixel points through the second model according to the luma down-sampled reconstructed values of the one or more second pixel points comprises:

determining third chroma prediction values of the one or more second pixel points through the first model with adjusted parameters according to the luma down-sampled reconstructed values of the one or more second pixel points, and determining a third prediction error corresponding to the first model with adjusted parameters according to the third chroma prediction values and the true chroma values of the one or more second pixel points;

determining fourth chroma prediction values of the one or more second pixel points through the second model according to the luma down-sampled reconstructed values of the one or more second pixel points, and determining a fourth prediction error corresponding to the second model according to the fourth chroma prediction values and the true chroma values of the one or more second pixel points;

determining whether the third prediction error is smaller than the fourth prediction error;

in response to the third prediction error being smaller than the fourth prediction error, determining the target chroma prediction values of the one or more second pixel points according to the third chroma prediction values of the one or more second pixel points; and

in response to the third prediction error being not smaller than the fourth prediction error, determining the target chroma prediction values of the one or more second pixel points according to the fourth chroma prediction values of the one or more second pixel points.

20. The method according to claim 16, wherein after determining the one or more second pixel points that do not satisfy the first condition from the target coding block, the method further comprises:

detecting whether a number of the one or more second pixel points is greater than a number threshold;

in response to the number of the one or more second pixel points being not greater than the number threshold, determining target chroma prediction values of the target coding block according to the first chroma prediction values of the target coding block;

determining target differences of the target coding block according to the target chroma prediction values and true chroma values of the target coding block; and

generating coding information corresponding to the target coding block according to the index information and the parameter information of the first model, and the luma down-sampled reconstructed values and the target differences of the target coding block;

determining the target chroma prediction values of the one or more first pixel points according to the first chroma prediction values of the one or more first pixel points comprises:

in response to the number of the one or more second pixel points being greater than the number threshold, determining the target chroma prediction values of the one or more first pixel points according to the first chroma prediction values of the one or more first pixel points;

determining the target chroma prediction values of the one or more second pixel points through the second model according to the luma down-sampled reconstructed values of the one or more second pixel points comprises:

in response to the number of the one or more second pixel points being greater than the number threshold, determining the target chroma prediction values of the one or more second pixel points through the second model according to the luma down-sampled reconstructed values of the one or more second pixel points;

respectively determining the target differences of the one or more first pixel points and the target differences of the one or more second pixel points according to the target chroma prediction values and the true chroma values of the one or more first pixel points and the target chroma prediction values and the true chroma values of the one or more second pixel points comprises:

in response to the number of the one or more second pixel points being greater than the number threshold, respectively determining the target differences of the one or more first pixel points and the target differences of the one or more second pixel points according to the target chroma prediction values and the true chroma values of the one or more first pixel points and the target chroma prediction values and the true chroma values of the one or more second pixel points;

generating the coding information corresponding to the target coding block according to the index information and the parameter information of the first model, the index information and the parameter information of the second model, the luma down-sampled reconstructed values and the target differences of the one or more first pixel points, and the luma down-sampled reconstructed values and the target differences of the one or more second pixel points comprises:

in response to the number of the one or more second pixel points being greater than the number threshold, generating the coding information corresponding to the target coding block according to the index information and the parameter information of the first model, the index information and the parameter information of the second model, the luma down-sampled reconstructed values and the target differences of the one or more first pixel points, and the luma down-sampled reconstructed values and the target differences of the one or more second pixel points.

21. The method according to claim 16, wherein before determining the target chroma prediction values of the one or more second pixel points through the second model according to the luma down-sampled reconstructed values of the one or more second pixel points, the method further comprises:

constructing the second model through a target mapping relationship according to the luma down-sampled reconstructed values and the true chroma values of the one or more second pixel points, wherein the target mapping relationship is configured to characterize the nonlinear mapping relationship between the luma down-sampled reconstructed value and the chroma prediction value.

22. The method according to claim 21, wherein constructing the second model through the target mapping relationship according to the luma down-sampled reconstructed values and the true chroma values of the one or more second pixel points comprises:

determining a value of each parameter in a target formula according to the luma down-sampled reconstructed values and the true chroma values of the one or more second pixel points, wherein the target formula is configured to characterize the target mapping relationship; and
constructing the second model according to the target formula and the value of each parameter.

23. The method according to claim 22, wherein the target formula is as follows:

$$pred_C(i,j) = \alpha_2 \cdot (((rec_L'(i,j))^2 + midValue \gg bitDepth) + \alpha_3 \cdot rec_L'(i,j) + \alpha_4 \cdot midValue$$

wherein *bitDepth* is a bit depth, *midValue* is a median of the bit depth, *pred_C(i,j)* is the chroma prediction value of a pixel point at coordinates *(i, j)*, $rec_L'(i,j)$ is the luma down-sampled reconstructed value of the pixel point at the coordinates *(i,j)*, $\alpha_2$, $\alpha_3$, $\alpha_4$ are values of parameters in the second model, and >> is a shift operation.

24. The method according to claim 16, wherein the chroma prediction error of the pixel point by the first model is determined by any one of:

determining the chroma prediction error of the pixel point by the first model according to a ratio between a first chroma prediction value and a true chroma value of the pixel point;
determining the chroma prediction error of the pixel point by the first model according to a difference between the first chroma prediction value and the true chroma value of the pixel point.

25. The method according to claim 24, wherein in response to determining the chroma prediction error of the pixel point by the first model according to the ratio between the first chroma prediction value and the true chroma value of the pixel point, the first condition comprises any one of:

the chroma prediction error of the pixel point by the first model satisfies a first formula and a second formula;
the chroma prediction error of the pixel point by the first model satisfies a third formula;
the chroma prediction error of the pixel point by the first model satisfies a fourth formula,
wherein the first formula is:

$$A(i,j) \ \text{<= threadhold1};$$

the second formula is:

$$A(i,j) \ \text{>= -threadhold1};$$

the third formula is:

$$A(i,j) \ \text{> threadhold1};$$

the fourth formula is:

$$A(i,j) \ \text{< -threadhold1},$$

wherein $A(i,j)$ is the chroma prediction error of a pixel point at coordinates $(i,j)$ by the first model, and threadhold1 is a first threshold.

26. The method according to claim 24, wherein determining the chroma prediction error of the pixel point by the first model according to the ratio between the first chroma prediction value and the true chroma value of the pixel point comprises:

determining the chroma prediction error of the pixel point by the first model through a fifth formula, wherein the fifth formula is:

$$A(i,j) = pred_C(i,j)/C(i,j),$$

wherein $A(i,j)$ is the chroma prediction error of a pixel point at coordinates $(i,j)$ by the first model, $pred_C(i,j)$ is the chroma prediction value of the pixel point at the coordinates $(i, j)$, and $C(i, j)$ is the true chroma value of the pixel point at the coordinates $(i,j)$.

27. The method according to claim 24, wherein in response to determining the chroma prediction error of the pixel point by the first model according to the difference between the first chroma prediction value and the true chroma value of the pixel point, the first condition comprises that the chroma prediction error of the pixel point by the first model satisfies a sixth formula;

wherein the sixth formula is:

$$\mathrm{Abs}(A(i,j)) >= \mathrm{threadhold2},$$

wherein $A(i,j)$ is the chroma prediction error of a pixel point at coordinates $(i,j)$ by the first model, and threadhold2 is a second threshold.

28. The method according to claim 24, wherein determining the chroma prediction error of the pixel point by the first model according to the difference between the first chroma prediction value and the true chroma value of the pixel point comprises:

determining the chroma prediction error of the pixel point by the first model through a seventh formula, wherein the seventh formula is:

$$A(i,j) = pred_C(i,j) - C(i,j),$$

wherein $A(i,j)$ is the chroma prediction error of a pixel point at coordinates $(i,j)$ by the first model, $pred_C(i,j)$ is the chroma prediction value of the pixel point at the coordinates $(i, j)$, and $C(i, j)$ is the true chroma value of the pixel point at the coordinates $(i,j)$.

29. The method according to any one of claims 16 to 28, wherein the first model is configured to determine the chroma prediction value mapped by the luma down-sampled reconstructed value according to a following linear mapping relationship:

$$pred_C(i,j) = \alpha_0 \cdot rec'_L(i,j) + \alpha_1,$$

wherein $pred_C(i,j)$ is the chroma prediction value of a pixel point at coordinates $(i,j)$, $rec'_L(i,j)$ is the luma down-sampled reconstructed value of the pixel point at the coordinates $(i,j)$, and $\alpha_0$, $\alpha_1$ are values of parameters in the first model.

30. The method according to any one of claims 16 to 28, wherein a value of each parameter in the first model and/or a value of each parameter in the second model is determined according to an estimated linear minimum mean square error jointly mapped by true chroma values and the luma down-sampled reconstructed values of the target coding block.

31. A decoding apparatus, comprising:

an information receiving module, configured to receive coding information corresponding to a target coding block, wherein the coding information at least comprises: index information and parameter information of a first model, index information and parameter information of a second model, luma down-sampled reconstructed values and target differences of one or more first pixel points, and luma down-sampled reconstructed values and target differences of one or more second pixel points, the one or more first pixel points are pixel points in the target coding block that satisfy a first condition, the one or more second pixel points are pixel points in the target coding block that do not satisfy the first condition, and the first condition comprises that a chroma prediction error of a pixel point by the first model is within a first threshold range;

a model determination module, configured to determine the first model and the second model according to the index information and the parameter information of the first model and the index information and the parameter information of the second model, wherein the first model is configured to determine a chroma prediction value mapped by a luma down-sampled reconstructed value according to a linear mapping relationship, and the second model is configured to determine a chroma prediction value mapped by a luma down-sampled reconstructed value according to a nonlinear mapping relationship;

a first chroma prediction module, configured to determine target chroma prediction values of the one or more first pixel points through the first model according to the luma down-sampled reconstructed values of the one or more first pixel points;

a second chroma prediction module, configured to determine target chroma prediction values of the one or more second pixel points through the second model according to the luma down-sampled reconstructed values of the one or more second pixel points; and

a reconstruction module, configured to determine chroma reconstructed values of the target coding block according to the target chroma prediction values and the target differences of the one or more first pixel points and the target chroma prediction values and the target differences of the one or more second pixel points.

32. A coding apparatus, comprising:

a first determination module, configured to determine first chroma prediction values of a target coding block through a first model according to luma down-sampled reconstructed values of the target coding block, wherein the first model is configured to determine a chroma prediction value mapped by a luma down-sampled reconstructed value according to a linear mapping relationship;

a second determination module, configured to determine one or more first pixel points that satisfy a first condition from the target coding block, and determine one or more second pixel points that do not satisfy the first condition from the target coding block, wherein the first condition comprises that a chroma prediction error of a pixel point by the first model is within a first threshold range;

a third determination module, configured to determine target chroma prediction values of the one or more first pixel points according to the first chroma prediction values of the one or more first pixel points;

a fourth determination module, configured to determine target chroma prediction values of the one or more second pixel points through a second model according to the luma down-sampled reconstructed values of the one or more second pixel points, wherein the second model is configured to determine a chroma prediction value mapped by a luma down-sampled reconstructed value according to a nonlinear mapping relationship;

a fifth determination module, configured to respectively determine target differences of the one or more first pixel points and target differences of the one or more second pixel points according to the target chroma prediction values and true chroma values of the one or more first pixel points and the target chroma prediction values and true chroma values of the one or more second pixel points; and

a first generation module, configured to generate coding information corresponding to the target coding block according to index information and parameter information of the first model, index information and parameter information of the second model, the luma down-sampled reconstructed values and the target differences of the one or more first pixel points, and the luma down-sampled reconstructed values and the target differences of the one or more second pixel points.

33. A decoding device, comprising one or more processors and a memory, wherein the memory stores a program or instructions executable on the one or more processors, and the program or the instructions, when executed by the one or more processors, implement the steps of the decoding method according to any one of claims 1 to 15.

34. A coding device, comprising one or more processors and a memory, wherein the memory stores a program or instructions executable on the one or more processors, and the program or the instructions, when executed by the one or more processors, implement the steps of the coding method according to any one of claims 16 to 30.

**35.** A computing processing device, comprising:

a memory, which stores computer-readable codes; and
one or more processors, wherein the computer-readable codes, when executed by the one or more processors, cause the computing processing device to perform the decoding method according to any one of claims 1 to 15 or the coding method according to any one of claims 16 to 30.

**36.** A computer program, comprising computer-readable codes, wherein the computer-readable codes, when run on a computing processing device, cause the computing processing device to perform the decoding method according to any one of claims 1 to 15 or the coding method according to any one of claims 16 to 30.

**37.** A computer-readable medium storing the computer program according to claim 36.

```
Receive coding information corresponding to a target coding block          S101
```

```
Determine the first model and the second model according to the index      S102
information and the parameter information of the first model and the index
information and the parameter information of the second model
```

```
Determine target chroma prediction values of the one or more first pixel    S103
points through the first model according to the luma down-sampled
reconstructed values of the one or more first pixel points, and determine
target chroma prediction values of the one or more second pixel points
through the second model according to the luma down-sampled
reconstructed values of the one or more second pixel points
```

```
Determine chroma reconstructed values of the target coding block according  S104
to the target chroma prediction values and the target differences of the one or
more first pixel points and the target chroma prediction values and the target
differences of the one or more second pixel points
```

FIG. 1

Determine first chroma prediction values of a target coding block through a first model according to luma down-sampled reconstructed values of the target coding block — S201

Determine one or more first pixel points that satisfy a first condition from the target coding block, and determine one or more second pixel points that do not satisfy the first condition from the target coding block — S202

Determine target chroma prediction values of the one or more first pixel points according to the first chroma prediction values of the one or more first pixel points, and determine target chroma prediction values of the one or more second pixel points through a second model according to the luma down-sampled reconstructed values of the one or more second pixel points — S203

Respectively determine target differences of the one or more first pixel points and target differences of the one or more second pixel points according to the target chroma prediction values and true chroma values of the one or more first pixel points and the target chroma prediction values and true chroma values of the one or more second pixel points — S204

Generate coding information corresponding to the target coding block according to index information and parameter information of the first model, index information and parameter information of the second model, the luma down-sampled reconstructed values and the target differences of the one or more first pixel points, and the luma down-sampled reconstructed values and the target differences of the one or more second pixel points — S205

FIG. 2

Decoding Apparatus

Information Receiving Module — 101

Model Determination Module — 102

103 — First Chroma Prediction Module

Second Chroma Prediction Module — 104

Reconstruction Module — 105

100

FIG. 3

Coding Apparatus 200

First Determination Module 201

Second Determination Module 202

203 Third Determination Module | Fourth Determination Module 204

Fifth Determination Module 205

First Generation Module 206

FIG. 4

Processor
1010

Memory 1020

Space 1030 For
Program Codes

1031

program codes for performing
the method steps according to
the present disclosure

Computing Processing Device

FIG. 5

Storage Unit For
Program Codes

1031'

readable codes for performing
the method steps according to
the present disclosure

FIG. 6

**EP 4 697 714 A1**

## INTERNATIONAL SEARCH REPORT

| | International application No. |
|---|---|
| | **PCT/CN2024/086305** |

| A. | CLASSIFICATION OF SUBJECT MATTER |
|---|---|

H04N19/186(2014.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; VEN; CNKI; CNTXT; ENTXT; ENTXTC: 编码, 解码, 译码, 亮度, 色度, 明度, 预测, 线性, 非线性, 神经网络, 重建, 重构, 差值, 像素, code, encode, decode, chroma, luma, prediction, linear, non-linear, CCLM, reconstruction, pixel

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2023041999 A1 (OFINNO, LLC) 09 February 2023 (2023-02-09) description, paragraphs [0036]-[0151], and figures 1-22 | 1-37 |
| A | WO 2020149616 A1 (LG ELECTRONICS, INC.) 23 July 2020 (2020-07-23) entire document | 1-37 |
| A | CN 115834897 A (SHENZHEN TRANSSION HOLDINGS CO., LTD.) 21 March 2023 (2023-03-21) entire document | 1-37 |
| A | KR 20210031669 A (KOREA ADVANCED INSTITUTE OF SCIENCE AND TECHNOLOGY et al.) 22 March 2021 (2021-03-22) entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 May 2024** | **04 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/086305**

| Patent document cited in search report | | | Publication date (day/month/year) | Patent family member(s) | | | Publication date (day/month/year) |
|---|---|---|---|---|---|---|---|
| US | 2023041999 | A1 | 09 February 2023 | None | | | |
| WO | 2020149616 | A1 | 23 July 2020 | None | | | |
| CN | 115834897 | A | 21 March 2023 | None | | | |
| KR | 20210031669 | A | 22 March 2021 | KR | 102358152 | B1 | 08 February 2022 |

**EP 4 697 714 A1**

**Patent documents cited in the description**

- CN 202310390303